# EUROPEAN PATENT SPECIFICATION

(11) **EP 4 612 908 B1**
(45) Date of publication and mention of the grant of the patent: **09.12.2026**
(21) Application number: 23790370.3
(22) Date of filing: 23.10.2023
(51) Int. Cl.: H04N 19/98, H04N 23/741, H04N 5/57

(54) **COORDINATING DYNAMIC HDR CAMERA CAPTURING**
KOORDINATION VON DYNAMISCHER HDR-KAMERAAUFNAHME
COORDINATION DE CAPTURE DE CAMÉRA HDR DYNAMIQUE

(30) Priority: 03.11.2022 EP 22205268
(43) Date of publication of application: 10.09.2025
(73) Proprietor: Koninklijke Philips N.V., 5656 AE Eindhoven (NL)
(72) Inventor: MERTENS, Mark Jozef Willem, 5656 AG Eindhoven (NL)
(74) Representative: Philips Intellectual Property & Standards
(86) International application number: PCT/EP2023/079480
(87) International publication number: WO 2024/094461

(56) References cited:
- US-A1- 2017 180 759

## Description

### FIELD OF THE INVENTION

The invention relates to methods and apparatuses for coordinating in variously lit regions of a scene the capturing of images by one or more cameras, in particular those who produce an image signal which comprises a primary High Dynamic Range image and luminance mapping functions for calculating a secondary graded image with different, typically lower dynamic range than the primary High Dynamic Range image based on the pixel colors of the primary HDR image.

The invention is defined by the independent claims. The dependent claims define advantageous embodiments.

### BACKGROUND OF THE INVENTION

Optimal camera exposure is a difficult problem in non-uniformly lit environments (especially when not having a single view on a non-uniformly lit environment, but when moving through various regions of different illumination and object luminance liberally). Historically many video productions were performed under controlled lighting (e.g. studio capture of plays or news), where e.g. the ceiling was full with lights to create a uniform base lighting. Nowadays, there is a desire to go shoot on the spot, and also due to cost reasons sometimes with small teams (maybe one presenter, one camera man, and one audio guy). Also, the boundary between professional producers and "lay man" producers is becoming somewhat less crisp, as we see e.g. from internet vloggers (who may know a little about lighting techniques, but not always sufficient to not create challenging lighting conditions), or even amateur capturings with mobile phones may be the most interesting news item about some local event. Further technical assistance on the technical matter of obtaining (good) YcbCr pixel color codes may always be useful. Especially for small production teams, if the technical components can take some of the burden of creating well-looking videos away, the creators can then focus more on other aspects of video creation such as composition, story etc. (whilst not necessarily wanting to have an automatic system where they have no say at all about the colors and luminances of the various image objects).

Already in SDR (Standard Dynamic Range, a.k.a. Low Dynamic Range LDR), although ideally one works under well lit conditions (e.g. studio 1000 lux), one could already have capturing situations under ~300 lux (daytime; indoors), ~10x lower (low light), or even at or below 1 lux (dark). [The ~ sign indicates "approximately"] When using "amateur" cameras, auto-exposure may happen quite automatically (in more professional systems usually one will control some aspects, like e.g. a maximum amount of noise, although in some situations it may be better to at least see something, albeit noisy, than very little). Real world environments may produce not only very different average luminance, or light level or illuminance of various regions in the scene to be captured, but also (especially when there are emissive objects in the scene) there may be a considerable spread or ratio between the luminances of object areas which project on different sensor pixels. E.g., right before sunrise, the local environment in which the videographer is standing may not get any direct sunlight yet, but the sky in the distance may already be lit by the sun. So the sky may have a luminance of several hundredths of nits (which is the engineers name and better-voicable naming of the phyiscs unit Cd/m^2), whereas the objects around you may only have luminances of a few nits or less. During nighttime, the average street luminance may be a few nits, yet while looking in the direction of light sources one may see several 10,000s of nits. During daytime in the sun, objects may reflect many thousands of nits, but again all depends on whether we have a white diffuse (or even specularly reflecting) object in the sun, or a black object in some shadow area. Whereas indoors objects will fall around the 100 nit level, again depending on whether the object is e.g. lying close to the window in a beam of sun, or in an adjacent unlit room which can also be captured from the same shooting location when the door to the unlit room is open. Actually, this is exactly why engineers wanted to move towards HDR imaging chains (the other factor being the visual impact for viewers). SDR cameras with a small dynamic range between darkest (non-noisy) capturing of dark object luminances and full pixel well with not so many more photo-electrons, would typically expose correctly for the actors or speakers indoors, and thereby clip to white (or pastel color) the objects outside the window. Sometimes this would give pretty weird results, if the presenter is e.g. positioned against a bookshelf in the deep end of a room, far away from a window in quadratically diminishing illumination, and one sees half of the bookshelf disappear towards the window (become clipped to maximum white). In fact, with such a limited dynamic range of at least one of the camera, codec, and display, one needs to be very careful regarding lighting and exposure, and oftentimes at least something will be clipped to white or pitch black. The worst cases encountered -but those would normally be shot only by amateurs (unless for express artistic reasons)- would even have half a face clip to white.

But there is not merely a camera problem (regarding its maximum capturing capabilities and the optimally controlled use of those), there was also a problem in the manner in which one in standard manner wanted to code the captured image. Even if a camera could capture very deep blacks accurately, i.e. with a noise floor say below 1/10000 of full pixel well, a typical representation in any output image is to put the main person or object in the scene at around 25% of white (the white to be displayed typically occurring by driving a display to its maximum brightness, e.g. backlight full on and LCD pixels fully open), as a percentage of peak luminance (which would in an approximately square root luma coding typically correspond to a luma of 128 out of 255). This means that under these production criteriaone has only 2 stops (i.e. multiplicative factors x2) of brightness left above face color, guaranteeing that anything in the scene that is a little brighter than the local diffusive white would clip (potentially even in the raw camera capturing of the sensor if it is exposed according to the same technical criteria). One may want to tune on this, by using the controls of the camera, but that would be a setting for the current view, from the current position, in the current scene. Different scene shots might -if indeed already- be fine-tuned somewhat in post production, but are usaully just mixed together. Even if one can apply automatic camera exposure control several times for different shots of different positions, there is no relationship between those settings.

The human eye adapts to all of this in an almost perfect manner, as it can change the chemistry of signal pathways in the cones, leading to different sensitivity, and weigh the signals of neurons, locally for brighter and darker objects in the field of view as desired (e.g. staring for some time at a bright red square, will thereafter make you see an anti-red cyan square in your field of view, approximately there where the original square was imaged, but that will soon be corrected again). In the brain we are mostly interested in what kind of object we see, e.g. a ripe sufficiently yellow banana, not so much in how exactly the banana was lit by which beam of sunlight. The brain wants to come to the ultimately summarized representation allowing to see the tiger hiding in the bushes, whether during the day, or at night. If we want to represent an original scene with original conditions (original luminances in the field of view e.g.) by a (reasonably faithful or rough) simulation such as a displayed version of that scene under dim evening living room illumination, ideally that simulation contains more or less that relevant information human-vision-wise, so that the brain can attempt to form the illusion of seeing more or less the exact scene. A camera however counts photons, converting each group of N incoming photons to a measured photo-electron, and is in that respect both a simple device, but also for advanced applications a rather dumb device. That counting would be good if one needed to do some exact measurement, such as e.g. whether a part of a building is sufficiently lit, but this property is less appropriate for video display chains. A difference can be seen even with one camera, if one drives e.g. into and thereafter out of a tunnel back into a sunny environment. The design of the lighting inside the tunnel is optimized for human vision, not necessarily for any camera. Driving out of the tunnel, with some delay one first sees the outside environment images being almost entirely white (in the capturing), and then the average luminance-based auto-exposure algorithm regulates the outside environment images back to technically sufficiently well-exposed images. As a human we see a normal impression of a dimmer impression inside the tunnel, and a bright but normally still well visible environment outside also. I.e. human vision seems perfectly adapted to the majority of lighting conditions in our world, even if many of those are man-made. Only under the worst conditions there may be a visibility issue, such as when on a sunny day driving into a shadowy area, and then mostly because the sunlight reflects on dirt on the front car window.

In a number of scenarios more than one camera and possibly more than one moving camera man may be involved in the production of the video, and it may be desirable to coordinate the brightness look of those cameras. In several productions this may be done in a separate locus or apparatus, e.g. in an Outside Broadcast (OB) truck (or even grading booth in case of non-real-time airing). Usually now everything relating to the production of a good video has to happen, real-time, so by a team of specialists who focus on different things. A director of e.g. a sports broadcast is occupied way too hectically to say anything about the capturing except for which camera man should roughly capture what, and so he can select which primary camera feed ends up in the ultimate broadcast signal at which time. In fact, whereas a movie is a perfect artistic synchrony between plot, geometric capturing compositions, emotions, music, etc., which gets both thoroughly planned before the movie (story boards etc.), to a certain extent during the shoot, and in post-production (applicable looks being graded on the captured content, even to such extent as day for night shooting), the real-time producer has to bring in all the art on-the-fly. The life broadcast producer can only bring in his talent and experience, e.g., having watched and produced many football matches before, he knows when the audience would prefer to see the score board rather than the boring speech of somebody. But technically, the primary camera feeds should be "just good, period", so the director can rely on them when selecting. Cameras can have a few capturing settings, such as a knee point for rolling off or a black control, and one would typically set these to the same, standard value, so that one gets e.g. the same looking blacks. When a camera has a different black behavior, this could become noticeable, because you get milky blacks. Therefore one may use standard video test signals (color an grey bars), and adjust somewhat if desired. Under his fast pace, if the colorimetry is really wrong, the director may just discard the feed like the one of a camera man who is still struggling to e.g. get the right framing of a zoomed fast moving action. But he may also consider the feed is important, and then you just get what you get, including whatever colorimetric artefact. So things should preferably be standardized and simple, and technically the primary camera feeds should at least fulfill minimal requirements of uniformity (e.g. if you have the same set of cameras, set all their controllable parameters to the same values for all cameras). Ergo, any system catering for such a scenario should pragmatically be sufficiently simple and workable.

For the increased complexity of liberal high dynamic range production, compared to standard SDR production, one may expect to rely even more on application-tailored technical solutions. But the complexity may also enable a uniform approach (though typically customizable) for several approaches. E.g., any future improved system for consumer capturing, may have similar needs of relative simplicity of operation, yet while powerfully covering many different capturing situations. High dynamic range creates new opportunities, but also challenges. Indeed, if one were to have (which still one does not) a camera with infinite dynamic range, one could just shoot in whatever setting, and correct it all in post just like one desires. But that full liberty is not what one desired in all situations, since there may be scenarios where one might want to limit the post-production, or already solve important aspects during shoot.

If one makes a movie consisting of several shots (e.g. daytime and nighttime), the coordination of those can be done after capturing (in post), e.g. a human color grader may change the ultimate luminances in the master HDR image typically of a video (e.g. a 1000 nit maximum image), so that the dark scene looks sufficiently dark after a previous daytime scene in the movie, or conversely not too dark compared to an upcoming explosion scene, etc. We consider without limitation the elected maximum luminance of any (relevant) pixel in the image being the maximum luminance of this specific grading (a.k.a. graded image) being a 1000 nit master grading, if one were to represent the scene with e.g. only one graded video. The grader can in principle in his color grading software optimize the master image luminance of each and any pixel (e.g., he may define the YCbCr color code of pixels of an explosion so that the brightest pixel in the fireball is no higher than 600 nit, even in a 1000 nit video maximum luminance (ML_V) master HDR video; the relation between luminances and color codes such as luminance coding luma codes can be done by electing a primary EOTF, such as PQ, but in case the actual coding specifics are a possible variable and not needed to elucidate the present invention we will talk about pixel luminances). But that does not say much yet about the relationship with the luminances of the fireball in the real world. Not only will those luminances depend on the amount of heat that happens to be produced in the explosion (which is typically not something pyrotechnicians accurately aim for), but importantly a camera is not a luminance meter (absolutely; just a photon counter), so the amount of photo-electrons accumulated in the pixel corresponding to the brightest spot of the fireball depends on, in addition to the sensor physics, the opening setting of the iris, and the exposure time of the shutter (and maybe a neutral density filter in the optical path). This is the bridging the gap between the world of scene (and camera) and the world of the ultimate displaying. What is captured is not the most important aspect, but rather what is to be seen upon display (which is one of the reasons why some of the HDR coding formalisms prefer to work display-referred, possibly even inside a camera). In a movie production the color grader may be the entity that crosses the divide, i.e. selects the appropriate specification of what shall be displayed exactly for the captured image. One could say that ultimately what one sees displayed of the image is what matters, not the mathematical numbers of the pixel colors. But opponents of the display-referred approach may argue that one the one hand there is no certainty on how people will see the result, and that there should be some deference for the original image (which may e.g. be of perfect future-oriented quality). Still, it has been shown by inter alia the present applicant, that one can meet requirements by defining (at least one) graded image, for some ideally envisaged target display. Note also that at least a high maximum luminance master grading has no real quality loss compared to camera raw, and can for most intents and purposes form the stored original (since the raw camera data is not very significant for human consumption). We found that even a low bit (8 bit) LDR corresponding grading is invertible to a large extent, but in any case the display-referred part is in absolute nit HDR codec approaches fulfilled by the secondary grading, e.g. a reference LDR grading corresponding to the master HDR grading.

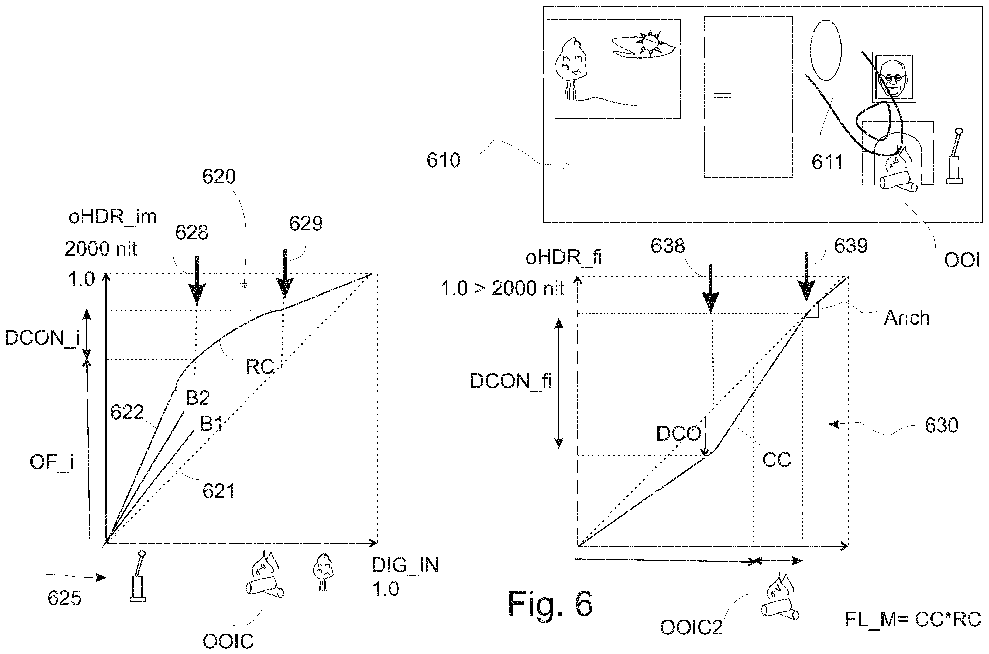

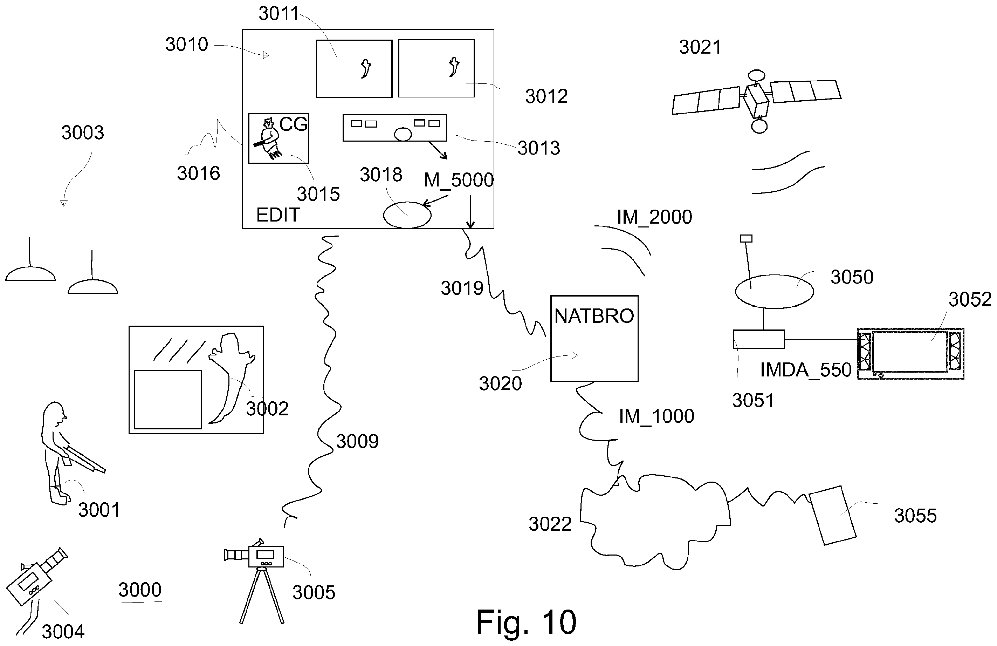

**Grading** (or color grading, although the primary aspect to fine-tune are the brightnesses or luminances of the colors, the latter being a specific formulation of the brightness channel of the video) refers to some human or automaton (or semi-autonomous combination) specifying as needed the pixel luminances of various objects of a captured image along an elected range of luminances. The need will be some display scenario. E.g. as shown in Fig. 6, one may want to make a 2000 nit white point luminance a.k.a. maximum luminance graded master HDR video as (sole, or one of the) output video of one or more cameras which record the video program in the scene. The raw capturing of the camera sensor is not a grading, as it is not optimized for human consumption on display (e.g. objects in a shadow area may be darker than desired, whether in a HDR grading or an LDR grading). Whereas apparatuses or users further down a video communication chain may use all kinds of secondary gradings (see short elucidation with Fig. 10), a camera may output one (master) graded version of the captured content (which one may call the HDR master), but it may also be advantageous if it outputs a second (differently) graded version of the captured video, e.g. usefully an LDR video (which one may call LDR master). Some consumer of the content may use the first version, others the second, others both. The grading allocates the various objects that can be captured as digital numbers from the analog-digital convertor (ADC 206) of the camera, which are a digital capturing of the respective sensor pixel well filling state with photo-electrons, to elected (good looking) luminance values. The nomenclature digital number points to the fact that the number, which is a relative indication of how bright an object was, relatively, in the captured scene, is e.g. a 16 bit number 011011011 11110000. E.g., a ~ 5000 nit flame of a open fireplace in the scene can end up at digital number 50000 (or normalized 50000/65536=0.76), but that would depend on the elected capturing settings of the camera such as e.g. iris opening, and the grader elects it looks good in the 2000 nit master grading of his video at e.g. 500 nit (average pixel luminance for the fire object image region). Ergo, if the end-consumer purchases a television with a display maximum luminance (ML_D) equal to the 2000 nit (ML_M) value, he will typically display all luminances as formulated in the video signal, i.e. in the master HDR output image(s). I.e. he gets to see the image nearly exactly as intended by the creator. If the television has e.g. only a capability of ML_D= 700 nit, a perfect displaying of the movie as intended won't be possible, but a receiving-side apparatus like a television display will down-grade the 2000 nit master HDR image by applying a display optimization mapping as we described in previous patents, but that is tangential to the present camera-capturing and production technologies being described. Display optimization can be done coarsely, or trying to maintain as much the originally intended look within the limited luminance dynamic range capabilities. We will call in this patent the image of raw digital numbers measuring the scene a **"capturing",** to discriminate from **"images"** (e.g. output images, such as from a camera to an OB truck, or images to be broadcasted, which may be differently defined but could also elegantly be similarly defined if one designed to shift some of the color math to the cameras), which we typically consider graded, i.e. having optimal brightness values, typically luminances or in fact luma values coding for them, according to some reference (e.g. a 2000 nit targeted display). The common election of such a reference, makes that camera coordination becomes easier, although still not trivial, but at least commonly referable. It will be clear from the sentence when "grading" points to the method of changing luminances, respectively when it points to some graded image (irrespective of whether that grading resulted from mapping the original camera digital numbers in the capturing, or whether it resulted as a re-grading or further grading from an earlier produced grading), in fact most of the time we will be talking about the resultant graded images (rather than the process).

Moreover, even if one has the liberty to rely on perfect grading in post-production (i.e. any "error" in a pixel luminance or color could at least in theory be corrected by full re-definition of those pixel color values during post-production grading), which is a liberty that real-time productions like a capturing of the tour the France on a motorcycle do not have, there is still the challenge or opportunity that one would like more freedom in the (exposure of) the raw capturing of a single scene (which may consist of following somebody through a tour of a factory e.g.; or the bicycles riding through a tunnel). In fact, one might desire to marry freedom with consistency, to get some kind of consistent freedom. This may become important in the future, where not only different kinds of video production will emerge or continue to become more popular, but also new technologies, e.g. relating to the capturing of different views on or aspects of the scene.

And furthermore, in some occasions one might -immediately- desire the production of several videos of different dynamic range for the capturing (e.g. a HDR version and a corresponding LDR version to be offloaded from camera to some distribution network or memory). E.g. the LDR version may be broadcasted immediately to customers (e.g. via a cable television or satellite distribution system), and the HDR version may be stored in the cloud for later use (e.g. future pay-per-view), maybe a rebroadcast or video snippet reuse ten years later.

Several kinds of video production may benefit from the below new insights and embodiments. Classical movie or series production may shoot the same scene time and again, from different angles successively (e.g. for a fighting scene once from behind the aggressor so we look down to the victim on the ground, and once lateral from close to the ground), and for such applications the below presented innovations may provide benefits for increasing production speed, simplify capturing, enable more easily more complicated capturing situations, or increase or relax post-processing possibilities, and in some situations one may want to capture the entire action through a complicatedly illuminated scene in one, or a few coordinated, shots. We indeed see a desire that not only professional shows will no longer only shoot from the few static television cameras placed around the scene, but even semi-professional company communication videos (e.g. private company network airing of a reporting of a visit of employees from another company or hospital to a business unit) may want to depart from the static presenter to somebody moving around everywhere, leaving the presentation room and walk into the corridors, maybe even step into his car and continue the presentation while driving. Especially when technology can help taking over some of the complicated work, "amateurs" can also start making more professional videos. That is not difficult when producing just any capturing "as is", i.e. with either fixed exposure settings or relying on whatever auto-exposure the camera does (suffering any consequence, like typically clipping, and incorrect color of regions, e.g. parts which are too dark and badly visible, or just more ugly than optimal), but is quite a challenge for a high quality HDR production, especially given that the technology is relatively new, and many are still working on optimizing the basics. In fact, technology can help avoid it becoming somewhat of a chaos at times.

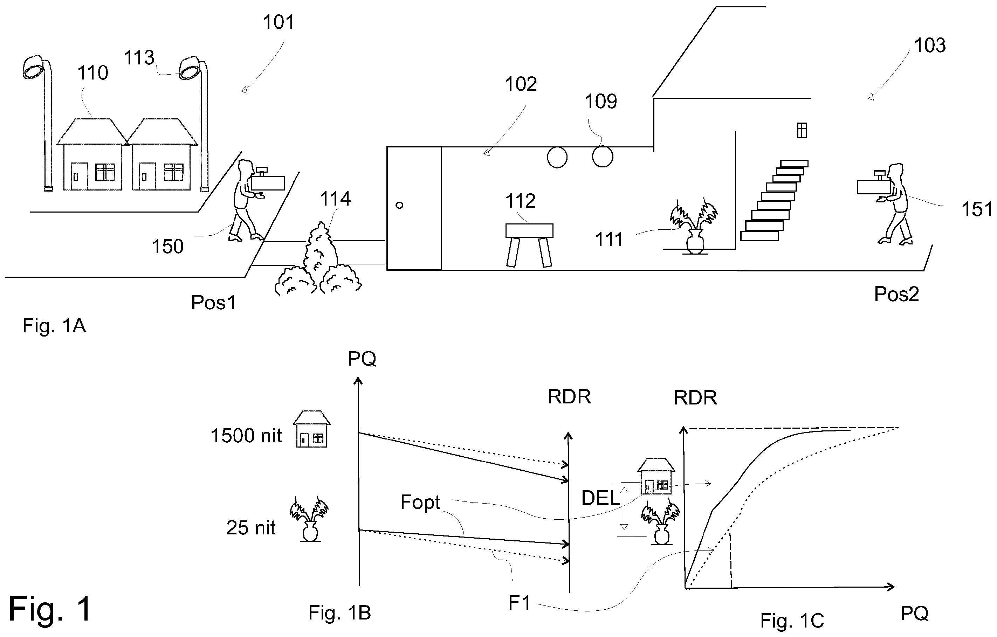

**Fig. 1A** shows an illustrative example of a typical non-trivial dynamic capturing, with indoors and outdoors capturing. It is known that even with classical one-level exposure (i.e. one comes to some integral measurement of the illumination level of the present scene, which, to fill pixel wells up to a certain level, needs a corresponding value for the camera settings, iris, etc., i.e. leads to the setting of such values for the further capturing), e.g. when being near a window where the light level goes down quadratically with distance, exposing for the face of the speaker may over-expose objects near the window. This is certainly a common problem in a Low Dynamic Range LDR (a.k.a. Standard DR) capturing, and certainly when there are beams of sunlight, some pixels may clip to the maximum capturable level (white, e.g. luma code 255).

We want a camera man to be able to walk liberally from the outdoors (101) to an indoors area (103), possibly through a corridor (102) where there may be some lamps (109) to create a gradual change in local illumination (illuminance). Getting a "correct" exposure in a high dynamic range camera (i.e. a camera which has e.g. 14 stops or more, or 16000:1 contrast ratio, e.g. 100,000 photo-electrons full well and 5 electrons noise; with nowadays sensor designs one can speak of "equivalent full well", and capturing dynamic ranges above 2 million to 1 seem feasible for mainstream cameras in a not too far future), in the sense of a "good" capturing of all information, is not so difficult with such a large capturing dynamic range. Since one can go much darker -with good capturing precision- than a bad camera, one may e.g. merely focus on getting the brightest objects sufficiently captured without color channel clipping or desaturation. That may yield an unsatisfactory picture if one where to (directly) map the brightest image white onto e.g. the maximum displayable white of a 450 nit display. However, one could always brighten later, at least in principle, by grading (as the information is still in the darker pixel colors without too much deterioration, in particular if those are captured not noisy). Note that for very challenging HDR scenes/environments a 14 stop capturing may still require care (e.g. one should not expose for the filament of a light bulb which may be more than a million nit, if one doesn't want too noisy an exposure for dark corners).

Even if exposure for high dynamic range cameras (/video usage chains) may not be too problematic, since one may record the objects as relatively dark percentages of white, which objects can then be brightened according to desire in post-capturing image processing, even with HDR capturing the problem with correct exposure comes back when a (typically) secondary image of lower dynamic range is desired. We need to compress a HDR scene then in a low available dynamic range, and that requires more reflection (it can partly be seen as a virtual re-exposure). However, one digitally has more possibilities than a simple control with i.a. an iris opening. Still, creating a good LDR image for a challenging HDR scene or more specifically its master HDR grading, is not necessarily easy.

In general, iris or exposure control can either be done manually or automatically. E.g., as shown in EP0152698, the captured image analysis can consist of determining a maximum of a red, green and blue component capturing, and set iris and/or shutter (possible also in cooperation with a neutral density filter selection, and electronic gain) so that this maximum doesn't clip (or doesn't clip too much).

A popular control method uses an average (or more precisely some smart average algorithm, giving e.g. less weight to bright sky pixels in the summation) of a scene luminance (or relative photon collection) as a very reasonable measure at least in a SDR capturing scenario. This is inter alia also related to how the captured SDR lumas are straightforwardly displayed in an SDR displaying scenario: the brightest luma in the image (e.g. 255), functioning as a largest control range value of a display driving signal, typically drives the display so that it displays its maximum producible output (e.g. for fixed backlight LCD the LCD pixels driven to maximally transparent), which displayed color visually looks white. The reasonable assumption -for the "display as a painting" approach is that under a single lighting (i.e. reasonably uniform, e.g. by using controlled base lighting, e.g. by a matrix of lamps on the ceiling in a television studio production) diffusely reflecting objects in the physical world will reflect between about 1% and 95% of the present light level. Specular reflections can be taken to be just white. This will form a histogram of luminances spread around a ~25% level (or lumas spread around halfway luma code), To the human eye, the image will look nearly the same when displayed on a 200 nit ML_D display, i.e. with the white pixels having a displayed luminance of 200 nit, as on a 100 nit display, just as if a painting -which is primarily interesting because of the colors of the objects on it- is lit by stronger or weaker lamps, because the eye compensates the luminance difference away, and the brain only cares about seeing the relative differences of the object points on the painting respectively the LDR display. It also makes sense then to characterize this range of scene luminances relatively, by mapping its average to what fills the camera sensor pixels to ~ 25%, which will be even for LDR sensors a good sampling of the available information in such a scene. However, even in an SDR imaging chain, i.e. with SDR camera capturing yielding an SDR image as output and displaying on a legacy SDR display, the average is not such a good measure for e.g. bimodal scenes (e.g. indoors and the outside world through a window), or strongly narrow modal scenes, like e.g. a coal mine only containing a few shades of black. Yet still, with a little bit of camera operator finetuning, and/or grading, SDR seems to have worked impressively well in practice for say a century, showing home viewers everything from a coronation of the queen to the depths of the oceans. There only were a few desiderata prompting for a move to HDR, like brighter-than-white object capturing and rendering, and ideally also a better treatment of the blacks, and a more professionally controlled image description framework building layers of technology starting from a common basis, such as an associated targeted display with the HDR images, which has a maximum luminance, e.g. 2000 nits (ML_V of the video images).

However, this manner of average-guided exposure is a widely deployed (in fact ad hoc/de facto standardized) video creation practice from the SDR era which is one example of the many technical approaches warranting a full rethinking and redefined approach in an HDR ecosystem. In the chicken-egg problem, much of the earliest HDR technology, or at least that which got standardized, has in addition to the technical capabilities of making brighter displays focused on the definition and coding of HDR images (e.g. via Hybrid Log-Gamma, or SL-HDR). It was not necessarily developed how one may marry the creation of images to this new coding and displaying capability. One way of looking at things can be that one just considers the codec as something which must simply be able to record everything which gets produced, working as merely a "translator", and one keeps producing just as usual. Another way of looking at things is that one may want to make good use of the enhanced capabilities, e.g. just like the 3D movies with stuff getting thrown towards the viewer's heads, now nicely coordinated HDR effects like powerful bright colorful explosions, etc. A third way of looking at things is that one may want some additional creation technology to control the vast new dynamic range capabilities one has, so that things do not go haywire. That seems to be a rationale behind the 1000 nit bridge point for content creation that tries to marry the relative HDR paradigm of HLG with the absolute ones like Dolby Vision or SL-HDR. US2017/0180759 is an example of a versatile system for getting master HDR videos by some transmission method to receivers, e.g. end consumers. It enables representing an original master grading video having a **Target Display Maximum Luminance** (a.k.a. white point luminance) of 5000 nit, as a proxy video for communication, which has a target display maximum luminance of e.g. only 2000 nit (i.e. pixel luminances at most having a luminance of 2000 nit). On the receiving side one can then make videos of TDML lower than 2000 nit, e.g. 400 nit, but also reconstruct the original master HDR video from the received proxy (called intermediate dynamic range video), or make even brighter output videos.

For the reader's quick recapture of various parts of the video communication or usage chain, which parts should not be confused, we summarized a situation (to represent various situations, a consumer production of course having some of the components being present only vestigially at best) generically for elucidation in **Fig. 10****.**

What happens exactly, may depend on whether we have a live production, such as e.g. a sports event, or news coverage, or whether we have e.g. a movie which is shot over many days, then edited together, and then distributed, but in general some components will exist, at least as far as relevant for the present innovation. In a shooting location 3000 there may be a first actor 3001 under controlled lighting 3003, e.g. hanging from a crane, and a second actor 3002 in a dark area of the scene (this could be either a constructed scene, or a natural scene as found in place). There may be one or more cameras present, in this example a first camera 3004 e.g. mounted as steadicam on a person, and a second camera 3005 mounted at least for the moment statically in place on a tripod. As video compression becomes better and the internet more widely available, even the raw shots (e.g. dailies) may be communicated to a production studio 3010, which need no longer be in the vicinity of the shoot (e.g. an internet protocol video communication connection 3009 may be employed). There we assume (either real-time, or offline) some "director" is looking at the available raw camera shoots. Where a classical LDR shoot was mostly about the timing, logical placement etc. of the shots, now one can also make composition decisions regarding the grading of the various objects in the shots of the one or more scenes. In the present still relatively new HDR productions that would be relatively simple, e.g. boost the LDR with a fixed LUT tied to the HDR, which may be just a straight from camera, maybe with a little adjustment flavor. We assume for the present discussion there would be some person (or automaton) taking a role of "grader", and that role will have the say on the luminances and colors of the objects in the images (leaving the pace of the story to other people, e.g. director and/or editor). E.g. a differently graded versions of the shots (or part of a movie, or show, etc.) having different TDML can be watched simultaneously on typically a first reference display 3011 and a second reference display 3012. Grading changes can be effected via a color console 3013. There may also be a mix with graphical elements, e.g. a robot or monster, via graphics unit 3015, which may typically have a connection 3016 (e.g. again over the internet) to a graphics supplier (these techniques are known and need no deeper elucidation for the present patent application). The final product (cut) is a e.g. 5000 nit future-proof master HDR grading M_5000. It may be stored on memory 3018 for later use, and sent over some distribution medium 3019 (e.g. again internet) to say some content broadcaster 3020 (say the British Broadcasting Corporation). This broadcaster may distribute the video to end customers over various communication channels. E.g. (and we leave out various possible intermediate units, like e.g. a cable head-end) via a satellite a first intermediate version for transmission (proxy) IM_2000 with a TDML of 2000 nit may be made from the 5000 nit master, e.g. by an apparatus of the broadcaster, and communicated via television satellite 3021 to a satellite dish 3050 connected to a satellite television set-top-box 3051. We assume that the STB takes care of the calculation of a display-adapted version of the received video (IMDA_550), which gets coordinated with the end-user display 3052, and communicated over e.g. a HDMI cable. It is nowadays typical that broadcasters also offer at least some of their content via a web portal. E.g. a secondary proxy video (IM_1000, having only a 1000 nit TDML), may be communicated via e.g. a content delivery network 3022, and the end consumer may access that version e.g. on his mobile phone 3055. It is clear that many different setups can cooperate with and benefit from the below innovative embodiments. In fact, video delivery is becoming more hybrid ("standard"), e.g. IP packages can get delivered over classical communication systems like cable or satellite, but also over telecommunication standards like 5G, so the distinction between live "broadcasting", VOD, user-generated content etc. is disappearing to some extent. Ergo, also the video production example is intended merely for conceptual illustration rather than intended to be limiting in any manner.

Note that this video productions and communications may involve various HDR images and LDR images. High dynamic range images are typically understood to have more dynamic range compared to the status quo (which was well understood by the person skilled in the art of video and television tech), Low Dynamic Range a.k.a. Standard Dynamic Range. Those image would have a brightness range capability enough to range from a deep black to Lambertian reflecting white under uniform illumination (for simplicty say a piece of white paper). The darkness of the blacks depended on various technical properties of the capturing (e.g. camera noise) or display (e.g. surround light reflecting on display screen). There were no significant above-white pixel brightnesses. If one associates (as in the present more advanced HDR systems) luminance values in nit to pixel brigtnesses, then the LDR image would be characterized as having a typical white luminance of 100 nit (i.e. an associated TDML of 100 nit). A good minimum black for LDR would be taken to be 0.1 nit. Since several HDR codings will not desire deeper blacks, a HDR image or video can be defined from the SDR status quo to have a possibility to code brighter pixel luminances, typically at least two times brighter, i.e. a TDML of 200 nit or higher. Cameras will have means to capture those above-Lambertian-white scene brightnesses accurately (e.g. multiple pixels for different exposures, or multiple exposures of different length, or LOFICs and dual gain conversion pixels, etc.), and displays will have means to display extra bright pixels (e.g. separately intensity controllable 2D LED backlight matrices, where the normal brightness parts of the display will get a local LED illumination so that a luminance of 100 nit or less is displayed for those pixels, and the LEDs for e.g. self-luminous objects in the image will be driven e.g. 10x brighter, so that those pixels display as 1000 nit on the display screen.

US2017/0180759 is about the creation of various secondary HDR videos (in particular useful for various technical constraints of various communication systems), starting from an already made master HDR video, but it does not teach specifics regarding how various gradings (at least a master HDR graded video) should be made from camera capturing, and certainly not how various capturings of different shooting localities, with different local lighting of said environment, should be coordinated in one or more cameras, to come easily to a specific HDR grading as output (whether to be directly used for e.g. consumer display, or to be further handled, e.g. further re-graded, stored, mixed with other content, etc.).

Given the complexity of HDR video technology (and also the fact that the technical field emerged only recently) there is a need for a pragmatic and quick, mostly automatic handling of good exposure of primary gradings and oftentimes also in addition secondary gradings for on-the-fly dynamic lighting environment capturing of one or more cameras, coming automatically out of the camera as graded output video sequences, so that the camera operator and possibly director can focus on artistic (e.g. geometric composition) or storyline aspects (e.g. acting), such as from which angle to shoot an actor.

### SUMMARY OF THE INVENTION

The above needs are catered for by a method of control of a video camera (201) comprising setting a video camera capturing mode of specifying output pixel luminances for corresponding positions in a scene to be captured, in one or more graded output video sequences of images, which graded output video sequences are characterized by having a different maximum pixel luminance, comprising:
- an operator of the video camera moving to at least two positions (Pos1, Pos2) in a scene which have a different illumination compared to each other, and capturing at least one high dynamic range image (o_ImHDR) for each of those at least two positions of the scene;

- a color composition director analyzing for each of the at least two positions the captured at least one high dynamic range image, to determine a respective region of maximum brightness, and determining at least one of an iris setting, a shutter time, and an analog gain setting for the camera depending on the maximum brightness;
   - capturing for each position of the at least two positions (Pos1, Pos2) a respective master capturing (RW) using the determined at least one of an iris setting, a shutter time setting, and an analog gain setting for the camera, and storing said determined iris, shutter time and analog gain settings for later image capturing when the video camera resides in the corresponding position;
   - determining at least a respective first graded image (ODR) for the respective master capturing, which comprises determining an adjustable luminance allocation function (FL_M) for a respective position, which maps digital numbers of the master capturing to nit values of the first graded image (ODR); and
   - storing the respective luminance allocation functions (Fs1, Fs2) for the at least two positions, or parameters uniquely defining these functions, in respective memory locations (221, 222) of the camera..

A mode of behaviour of a camera is a manner of capturing and specifically of outputting video, and more precisely in this description how it will output specific luminances for pixels of the output image which correspond to points in the scene which get imaged by the camera lens onto the image sensor. The camera can output various versions of that video, namely various differently graded videos (i.e. different gradings), having different maximum luminance (ML_V), e.g. 3000 nit and 150 nit. The mode (and its characteristics) is set by determining (typically by a color composition director, either human or automaton) at least a luminance allocation function for each position to map the captured digital numbers to luminances graded as desired for that position, and typically coordinating the mappings for the various positions to a common range ending at the elected common maximum luminance (ML_V). That is after at least one set of capturing settings (iris, shutter speed, etc.) have been determined or are suitable for good capturing of the various positions in the environment where the shoot will happen (except for potential clipping of the very highest scene luminances above some electable maximum (which can be done iteratively by looking at what clips in the output images of each position)). The maximum brightness faithfully captured may typically be smaller than the ultimate maximum brightness in a scene, but typically only a minority of pixels will be allowed to clip, or at least what clips is of lesser importance, e.g. for following the program or story. The region may be as small as a single pixel, e.g. selected by the color composition director clicking on it (in any of the captured images during the initial environment discovery phase, until suitable values for the basic capturing parameters and the functions have been established). Another function that e.g. darkens the darkest scene elements in the at least one output graded video more than a first tested function, corresponds to another mode (of colorimetric behavior of the camera, i.e. of specifying output pixel luminances). So the mode of behavior is determined at least by the functions for the various positions. The color composition director knows how the maximum luminance will change in the region of maximum brightness, e.g. when closing the iris by one stop it will fall linearly by a factor two in the digital numbers, and fall with some amount (which exact value is not critical since only the positioning at or near the absolute maximum of the output range is required) in the output grading depending on the initially set mapping function (e.g. the default one or the one loaded in the processor from a previous operation). If the iris is opened, the maximum value will clip even higher, which can be seen because adjacent somewhat lower luminances will also start to clip. A value of the iris (and possibly the other parameters, i.e. the totality of what determines the sensor pixel exposure) can then be selected as that value which satisfies that just enough of the imaged pixels clip, as is elected for this shoot given the capabilities of this camera (e.g. possibly also looking at noise behavior for the blacks), but not more. The master capturing are the digital numbers that are outputted by the ADC, when doing a capturing with the capturing parameters (that have just been established, and are now set fixed for any later capturing for at least that corresponding position (and maybe also the second position if they work well by capturing substantially all scene objects faithfully there too)). It will serve as a stable starting point for thereafter optimizing what is very important, the correct grading functions for the various positions. These functions are shape adjustable (i.e. they can at will e.g. brighten the darkest pixels of the scene and dim the brightest pixels), and the shape to be used will suffice if it produces an acceptably looking at least one graded output video according to the color composition director. If a sub-range of luminances is e.g. too dark, the color composition director can locally in that sub-range raise the function (so that it produces higher output) compared to the current function shape.

Video cameras have roughly two inner technical processes. The first one, in fact an optimal sampling of optical signals representing the physical world, is a correct recording and usually linear quantification of a color of a small part of a scene imaged by a lens onto typically a quadruplet of sub-pixels (e.g. Red, Green// Green Blue Bayer, or a Cyan-Magenta-Yellow based sampling) on a sensor (204). The controllable opening area of an iris (202), and a shutter (203) (and possibly a neutral density filter) determine how many photons flow into the wells of each pixel (a linear multiplier of the local scene object brightness), so that one can control these settings so that e.g. the darkest pixel in the scene falls above the noise floor, e.g. 20 photo-electron measurement above 10 photon noise (and a noise of +- X photons on the value 20), and the brightest object in the scene fills the pixel to e.g. 95% (i.e. 95% of what the pixel well can measure respectively the ADC will represent as a so-called digital number DN). With an analog gain (205), one can pretend that more photons came in (as if the scene was brighter, because one may want to select iris and shutter also for other visual properties of the captured images such as depth of field and motion blur), by increasing a voltage representative of e.g. 25% pixel filling to the level of 50% (also in the digital domain one can amplify, but we will consider that under the more general class of all image improvement processes, not necessarily a multiplicative, linear brightening). An analog-digital converter (206) represents the spatial signals (e.g. an image of red pixel capturings) as a matrix of digital numbers. Assuming we have a good quality sensor with a good ADC, a e.g. 16 bit digital number representation will give values between 0 and 65535. These numbers are not perfectly usable, especially not in a system which requires typical video, such as e.g. Rec. 709 SDR video, for a number of reasons. So, the second inner process, an image processing circuit (207) can do all needed of various transformations in the digital domain. E.g., it may convert the digital numbers by applying an OETF (opto-electronic transfer function) which is approximately a square root shape, to finally end up with Y'CbCr color codings for the pixels in the output image. Y' is the luma representing the brightness of a pixel and Cb and Cr are chrominances a.k.a. chromas representing a color, i.e. hue and saturation (for HDR these may be e.g. non-linear components defined by the OETF version of the Perceptual Quantizer function standardized in SMPTE ST.2084).

This image processing circuit (207) (e.g. comprising a color pixel processing pipeline with configurable processing of incoming pixel color triplets) will in a novel manner function in our below described technical insights, aspects, and embodiments, in that it can apply e.g. configurable functions to the luminance or luma component of a pixel color, to obtain a primary graded image (ImHDR) and/or a secondary graded image (ImRDR), e.g. a standard dynamic range (SDR) image (so outputting at least one graded image, having reasonable image object pixel luminances or percentual brightnesses as output). Typically these may be recorded in an in-camera memory 208. The camera may also have a communication circuit (218), which can e.g. output images over a cable (SDI, USB, etc.), wifi, 5G, etc. (possibly by connecting the camera to an add on apparatus). For the communication system (209) the camera can use, we will e.g. assume for future-oriented professional cameras an internet protocol communication system. Also layman consumers shooting with a camera embodied e.g. as a mobile phone can use IP over 5G to directly upload to the cloud, but of course there are many other communication systems possible, and that is not the core of our present technical contributions.

Simple cameras or simple configurations of more versatile cameras, may e.g. supply as output image one single grading (e.g. 1000 nit ML_V HDR images, properly luminance-allocated for any specific scene, e.g. a dark room with a small window to the outside, or a dim souk with sunrays falling onto some object through the cracks in the roof). I.e they produce one output video sequence of temporally successive images - but typically with different luminance allocations for various differently lit scene areas- which corresponds to the basic capturings of the scene whilst the at least one camera man walks through it whilst capturing the action or other scene content. So on the one hand most of the information of the scene should be present -at all- somehow in the codification of the video (i.e. the luminances of the various scene objects in the represented output video; which is the "technical representation criterion"), where this may involve some degree of clipping of e.g. the brightest sun reflecting clouds adjacent to the sun, and one the other hand one preferably has these object luminances not only coding the scene brightnesses somehow (i.e. with clearly incorrect looking luminances upon display), but with correct-looking luminances (even if one may still want to adjust this first allocation of pixel luminances still further, e.g. according to artistic preference to give a final look to a scene of a movie). An example where an initial (e.g. automatic) grading and an artistic final grading may deviate is e.g. a high key look with clipping. The creator may on purpose -usually not in the camera capturing but that could be- clip some colors in the brightly lit half of a face, and raise the rest of the colors to the upper region of the RGB color gamut, so that bright low saturation colors result. The ready for display pixel luminances on a high TDML grading, e.g. having ML_V= 5000 nit, should not usually be around 5000 nit, because that will make the person's face look like a light source. One may want to put the clipped colors of the face on a level of e.g. 1000 nit, for that final master HDR grading (i.e. the movie for release). All of this can also be realized straight from camera, by defining the appropriate mapping functions as e.g. elucidated with Fig. 6.

The idea is that this primary grading is established based on a sufficiently well-configured capturing from the sensor, i.e. most objects in the scene -also the brighter ones- are well represented with an accurate spread of pixels colors (e.g. different bright grey values of sunlit clouds).

Thereto the basic configuration is a quick or precise determination of the basic capturing settings of the camera (iris setting, shutter time setting, possibly an analog gain setting larger than 1.0). The further determinations of any gradings can then stably build upon these digital number capturings. In fact, the camera need not even output the raw capturing, but can just output the primary graded e.g. 1000 nit (master) HDR images. As said, the capturing itself is only a technical image, not so useful for humans (psychovisally all the wrong brightnesses), so it need not be determined anywhere, but could be if the primary luminance allocation function is invertible and co-stored casu quo co-output.

The best setting of the basic capturing settings is done by a human (e.g. the color composition director, or the camera operator who can during this initialization phase double the role of color composition director, if he is e.g. a consumer, or the only technical person in a 2-person offsite production team, the other person being the presenter), although this could also be determined by an automaton, i.e. e.g. some firmware.

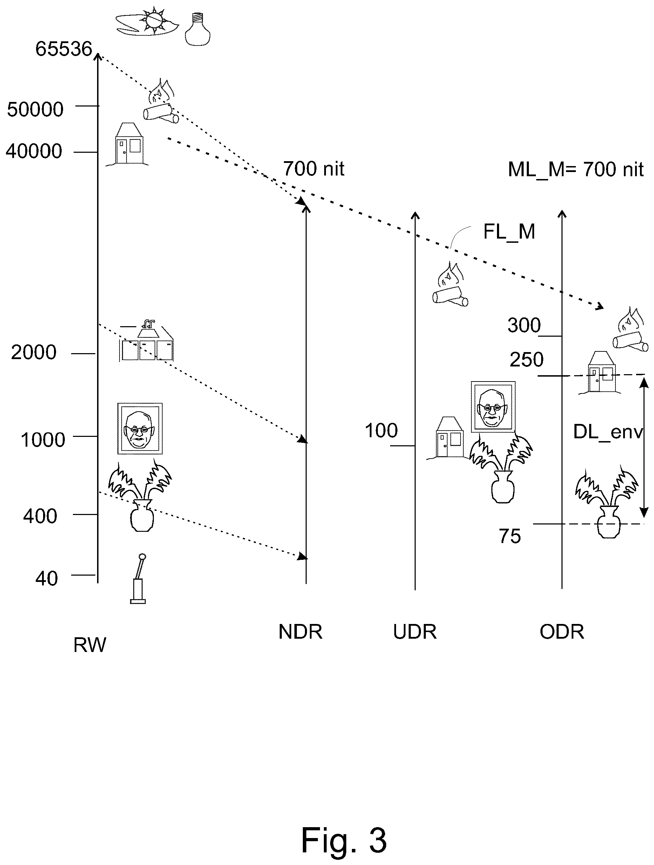

**Fig. 6** shows an example of a user interface representation, which can be shown on some display (depending on the application and/or embodiment this display may reside in an OB truck, or "at-home" e.g. in a studio of the broadcaster or producer in a production using REMI (remote integration model), or be e.g. a computer in some location on the set with a light covering, interacting with the camera, and which a single person production team, i.e. the camera operator, may use to do his visual checks to better control the camera(s), or it may be attached to the camera itself, e.g. a viewer). In principle only the camera operators need to be in situ (e.g. producing a semi-professional high school program). Also shown are graphical views to determine mapping functions (between various representations of the pixel brightnesses), but one of the views, the image view(610) shows a captured image (possible mapped with some function to create a look for the display being used, yielding basic impression and at lesss good visibility of the various scene objects, since the accurate colorimetry is not always in any application needed for determination of all of the various settings). Assuming it is a touch screen (the skilled person can himself understand from our basic examples how one can make equivalent versions, by e.g. using a sensor like a mouse) the human controller (i.e. what we named in the claim the role of the color composition director) can use his finger 611 to click on an object of interest (OOI). E.g. double tapping indicates (quickly) that the user wants these (bright) colors all well-captured in the sensor, i.e. below pixel well overflow for at least one of the three color components. That would mean the fire is always well represented, at least basically according to the technical representation criterion, and there will be no uncurable color errors. An image analysis software program interacting with the user interface software (e.g. running on a computer in the OB (outside broadcast) truck) can then determine which colors are in the area where the flames of the open fireplace resides. Say the camera operator (in cooperation with the color composition director) has captured a first raw capturing, or a derived graded HDR image, (or any derived grading for the display on which the color composition director decides his settings). In the wording of the present teachings, he has just determined a (at least one) original high dynamic range image **(o_imHDR).** Note that the original HDR image need not e.g. be in digital numbers from the ADC (or in fact a linear re-scaling of those), and will typically not be, since if one maps those DNs using some function inside the range of values of some representation, e.g. mapping the highest possible DN to a highest luma code (not necessarily power(2; N)-1 where N is the amount of bits representing the luma, e.g. if some luma codes are reserved for managerial purposes such as timing codes), one will also see which objects are well-captured from that secondary image representation. E.g. a patch of the flames all have pixel value (narrow range maximum luma) 940 without any variation may indicate one must close the iris to let less light in, lowering the values of all numbers in the o_imHDR, so that all the spatial pattern details in the flame then become visible. Depending on whether the color composition director wants to see those flame detials, or not, the corresponding iris setting will become the final setting (e.g. sometimes one may want to open the iris more, to not have too many capturing noise problems on the lowest end of the basic capturing, and the resulting o_imHDR). When the color composition director clicks or taps in at least one place, the software can check whether in this capturing the colors are already well-represented. Say e.g. all pixels of this flame have their red and green components fall between lumas 990 and 1020, and the blue component being lower for a well-captured bright yellow color. This functions already as a (graded or coded) representation of a good capturing image (the software in the e.g. OB truck can also receive the capturing, and check whether all digital number are below power(2; number_of_ADC_bits)). If there is clearly nothing higher, even roughly approaching the maximum, this may be a good capturing, unless the maximum pixel luma in the o_imHDR is far from the absolute maximum on cannot go above, in which case one may check again by e.g. opening the iris by 1/3^{rd} stop. On the one hand, as desired by the human, no pixel of this flame is clipping, and on the other hand the capturing seems good, because flames are a bright scene object, so we won't be capturing too few of the scene's otherobject's photons, which may leave the darker objects too noisy in the scene capturings/images. Note that the sun and some of the sunlit clouds may be brighter than the flame, but the human interaction UI allows specifically for selecting those as not the maximum to be captured, i.e. they may be badly captured and clipped (see RW range in Fig. 3). If the first original HDR image and the settings which were used for it are not already spot on, at least one further original HDR image may be taken. This could again be done either by automatically operating software, or advantageously under the guidance of a human. E.g., the software knowing that this tapping indicated a selection of a near image gamut top image, if its color components (largest color component at least) are below a value corresponding to half pixel filling, the software can select e.g. to increase the shutter time by a factor two a.k.a. one stop (provided that is still possible given the needed image repetition rate of the camera). If there is clipping, a secondary image can be taken with e.g. 0.75% of the previous exposure. Finally, if an original image is captured where the (elected) brightest object is indeed captured with at least one color sub-pixel near to overflow, i.e. any corresponding image pixel near to but not yet clipping (whether in DN, luma, or luminance when a full range of luminances has been associated with the range of DN's respectively lumas), the HDR capturing situation is considered optimal, and the optimal values of the basic capturing settings are loaded into the camera (or primary camera which takes care of the system color composition initialization in case of a multi-camera system). That is for this position in the scene. In principle these settings may only be valid for this position in the scene. There may be scenarios where it is possible to select one set of capturing values (i.e. one or more of iris, shutter time, etc.) for all positions this shoot is going to use (either if there is not much dynamic range in the scene, compared to the camera capabilities, or when using a very high sensor dynamic range camera), but in other situations one may want to coordinate the various capturing settings, preferably to use different optimal capturing settings for the various positions rather than to sub-optimize either for the darkest or brightest scene colors, e.g. clipping some of the flames if a criminal hiding in the darkest shadows need to be well-captured (keeping in mind his captured values may need to be brightened by later processing). But it may be useful, if doable, if at least these basic capturing settings are taken the same for the entire shoot, i.e. all considerably differently lit positions all along the scene (which would not be true for the luminance allocation/re-mapping functions typically, at least the ones that determined the secondary, lower dynamic range grading). So there may be a basic capturing settings consolidation phase. If e.g. for a first part of the scene it is considered that 1/100s may be a good setting for the shutter, and for another area, which has brighter objects, 1/200s is determined, the camera may load 1/200s for the whole capturing of every position in the scene (if there will not be too much objectionable noise, this situation optimizing for the brightest desired object in the totality of all shooting positions). This is because one determines then an overal desired brightest object in the total shooting environment: the shorter shutter time will lower all digital numbers of the capturing, and depending on the allocation of luminances and/or lumas, be it in a different possibly non-linear manner, also those values, but since the dynamic range faithfully captured by a high quality HDR camera, this is not a problem (ease of operation may be a more preferred property than having the best possible capturing for each individual position, which may be too high a capturing for many uses in many situations anyway). The optimization of the graded version of this capturing, will reside in the optimization of the mapping functions.

We will (as explained without wanting to be limiting) assume in the elucidation a single set of optimal values for the basic capturing settings is determined after initialization (so we can focus on the pre-setting of the coordinated mapping functions), i.e. after discovering the scene by the camera operator walking to at least various positions of challenging lighting, and applying the present technical principles, but the skilled person can also understand how several sets of basic capturing settings can exist for corresponding various positions, and how these can be loaded when during the actual video capturing of the e.g. movie the camera operator walks and starts shooting in the corresponding position, just as the functions which map luminances to obtain various (at least one) output gradings would be loaded for calculation from their respective memory positions. So walking to (or starting to shoot in) a somewhat darker room of the total shooting location, the iris will quickly reset to its determined value for that location, etc.

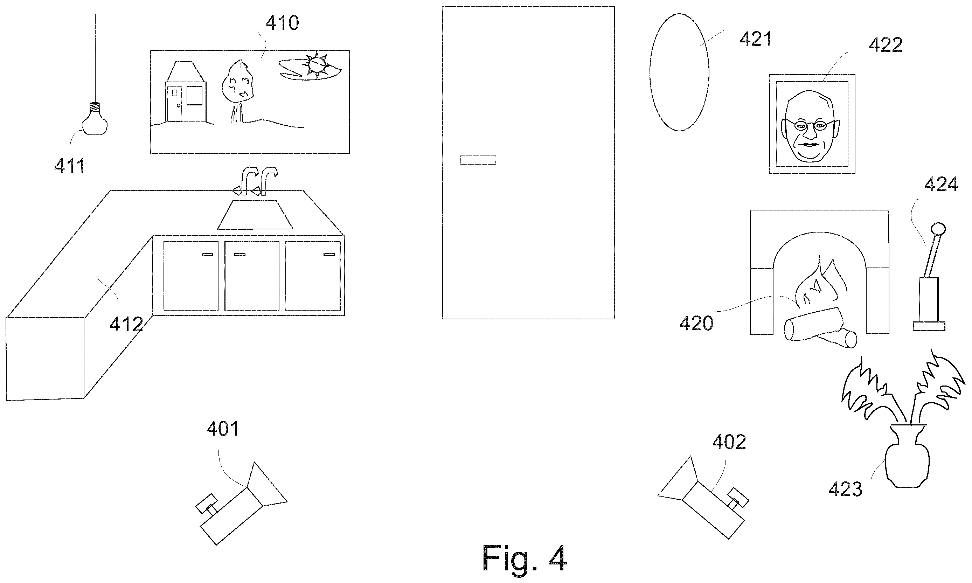

Different illumination comprises the following. It typically starts with how much illumination from at least one light source falls onto the scene objects, and gives them some luminance value. E.g. for outdoors shooting there may be a larger contribution of the sun, and a smaller one of the sky, and these may give the illumination level of all diffuse objects in the sun (of which the luminance then depends on the reflectivity of the object, be it e.g. a black or a white one). In an indoors room position-dependent illumination will depend on how many lamps there are, and in which positions, orientations (luminaire) etc. But for HDR capturing the local illumination or more exactly light situation determination should also include "outliers". As explained e.g. all or most of the pixels of a bright flame or other bright object of thousands of nits should be taken into account when determining the basic capturing settings, but especially for large areas of bright regions, such as a sunlit outdoors seen through a window, may be desired to be captured at least below clipping, and perhaps even at lower sensor pixel filling percentages. Small specular reflection blotches (e.g. a lamp bulb reflecting on metal) may be clipped in the capturing. We will for simplicity explain as if only the position matters, but the skilled person understands that one can in more professional embodiments also take into account orientation of the camera. As elucidated with **Fig. 4****,** a first camera 401 in a first position can see a different color/luminance composition if it is filming with an angle towards the indoors of that room (where in the example the brightest object is the flames 420, but it could also be a dimmer object, much dimmer than the outdoors objects), whereas if it points forward, it will see the outdoors world through the window (410). The light bulb 411 is typically a small object that might as well clip in any image (and also the sensor capturing). Even though the elliptical lamp 421 is large, the same may be true, although for such a large lamp it may be nice if at least for the highest dynamic range graded image output of the camera it still has some changing grey value from the outside to the middle (so we don't have an ugly "hole" or "blotch" in the image). An acceptable decision would be to not clip all pixels in the ellipse, but e.g. the brightest 10% in the center, so that the rest of the lamp still shows some gradation (even though the viewer will usually not be looking intensively at that lamp but at the action in the shot, it may be good to have this information in the at least one captured graded image, e.g. to do later image processing). Normal objects of "in-between" illumination like the kitchen 412, or the portrait 422, or the plant 423 will be automatically okay in the basic capturings if the camera (-system) has been set up according to the described procedure (those objects, e.g. the portrait may become more critical in the primary and secondary gradings being output of the camera(s)). That means, they may be okay in a technical representation sense, in that a reasonable sub-set of codes represent the various object colors (since the camera is a linear capturing, i.e. it will numerically not do worse for any higher brightness ranges than it would do for a range of the darkest colors), but not necessarily in the visual sense (for visual impression to a viewer), in that any "simple" allocation will not necessarily yield the desired intra-object contrast in all derived graded images. A more critical object to check by the human operator (or automaton) is the black poker 424 in a shadowy area in the room (where the light of the elliptical lamp is shadowed by the fireplace, and also the direct illumination from the flames). This capturing could be too noisy, in which case one may decide to open up iris and shutter more, and maybe lose the gradients in the elliptical lamp, but at least have a better quality capturing of the poker (which will need brightening processing, e.g. when an SDR output video is desired).

The master capturing (RW) will be an image with the correct basic capturing settings (the last one of the at least one high dynamic range image (o-ImHDR) having led to such settings). From this image of the current scene position and/or orientation, at least one grading will be determined, e.g. to produce HDR video images as output, but not simply a scaled (by a linear multiplier) copy of the capturing, but typically with better luminance positions (values) along a luminance range for at least one scene region (e.g. dim the brightest objects somewhat, or put an important object at a fixed level, e.g. 200 nit, or brightening the darkest captured digital numbers somewhat corresponding to what value they would have with a pure scaling like mapping the maximum digital number to the maximum image luminance, and every lower value linearly). Typically one will decide optimal representative (e.g. mid-sub-range) values for a number of object or regions, at least the important ones (the portrait, the fireplace, the kitchen sink, etc.), so that one gets the shape of a function due to the mapping of sub-ranges of input values to sub-ranges of output values (e.g. luminances to luminances, or correspondingly lumas to lumas).

A grading is normally not an image which has equal object luminance pixel ratios as their corresponding digital number ratios (i.e. for each selected set of two pixels from the image L1/L2=DN1/DN2, even after subtracting some black offset compensating for different starting points), but there are different schools of thought, or application desiderata, for which the present technical solutions must be able to cater.

A first application creates primary HDR gradings which remap the luminance positions which the digital numbers would get by simple maximum-to-maximum scaling (i.e. mapping the ADC maximum or any first range maximum, to a second range maximum, e.g. 1000 nit), only a little bit. For this redistribution/remapping from the pure scaling the color composition director could use a simple shape function, e.g. a power function, for which he may still want to adjust the power value. For some scenarios this is considered sufficient (at least for one of the possible graded image outputs).

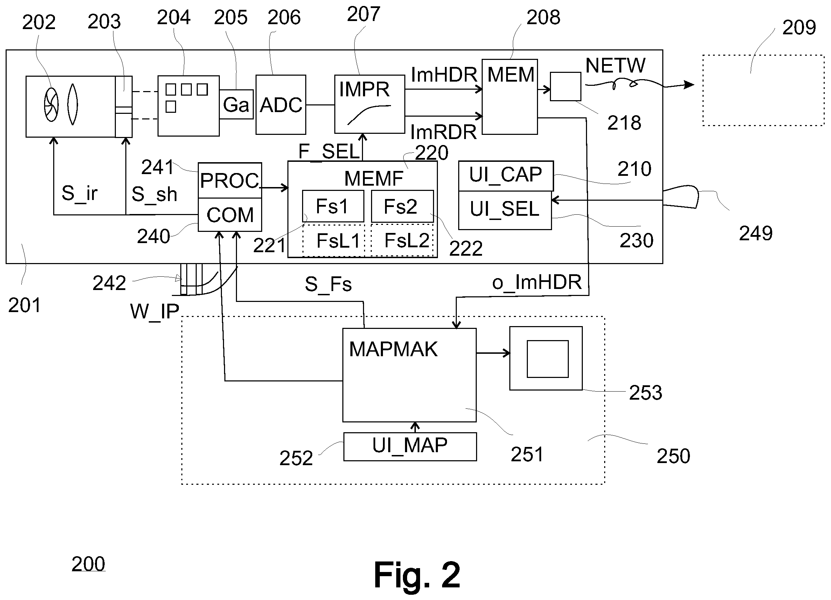

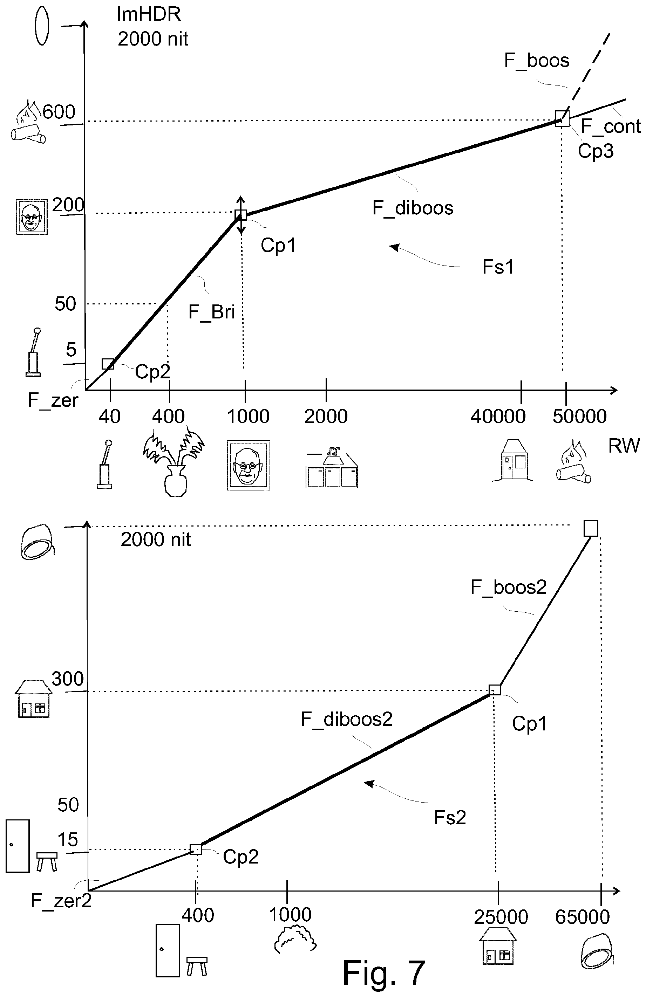

We will however in **Fig. 7** (non-limitedly) elucidate a typical simple grading control example, to quickly establish luminance mapping functions of the primary HDR grading: Fs1 and Fs2 respectively for an indoors and outdoors location, i.e. two typical exemplary positions (assuming the basic capturing settings are determined the same for all locations, e.g. when the elliptical lamp just starts clipping to sensor and ADC maximum). For a really good grading, the color composition director would relatively accurately like to see all luminances being displayed on a 2000 nit display in a typical viewing surround, when receiving this 2000 nit ML_V defined HDR output image (ImHDR of Fig. 2; in the first part of the scene discovery phase this image may have been used as image o_imHDR for first establishing as basis of the correct camera capturing settings, but now one or more HDR images are being produced for ultimate grading, with an optimal mapping function for each location, given the camera shooting under the determined capturing settings). Note that if only a primary SDR grading is output, especially one of higher word length e.g. 10 bit for the luma and chromas or other three color component representation, the same principles may apply in general, but then the various sub-ranges for the various scene image regions will have been mapped to different relative positions (e.g. brighter dark pixels), but ideally, at least in the future, one may want to produce as first grading always an HDR grading, for a HDR camera.

The indoors is a relatively complex environment, because there are several different light sources (outdoor lighting in the kitchen through the window, the elliptical lamp, additional illumination from the flames, shadowy nooks, etc.). In contradistinction with SDR shoots, where one would normally mind only the basic, average light level (and add some fill lighting for the darkest regions given that general base lighting capturing), in HDR shootings of good quality one should mind the various differently lit sub-parts of the scene, e.g. objects on a table under a strong spotlight, objects seen through an open door in an unlit adjacent room, self-luminous objects, etc., and all of those should get the correct visual impression in the final grading(s) to the end viewer, or at least a reasonable impression (so that an object with little importance for the story doesn't grab all attention e.g.). Especially to make a beautiful HDR movie, one can spend much more attention to the lighting composition of the scene (rather than just make lighting "good for capturing" mainly), and consequentially also to the primary and further gradings. But, to be sufficiently accurate yet still relatively quick (because there may be time before the actual shoot, but perhaps not too much time, or a layman consumer may not care for too many operations at all), the indoors position function -shown in the top graph- is controlled in the elucidation example with 3 control points. Advantageously, the director may first establish some good bottom values. The guiding principle used here is as said not to map the brightest object in the scene, i.e. some digital number close to 65000, on 2000 nit, and then see where all other luminances end up "haphazardly" below this (linearly). The idea is to give the darker objects in the scene, even in a 2000 nit ML_V grading, luminances which are approximately what they would be in a 100 nit SDR grading, and maybe somewhat brighter (e.g. a multiplicative factor 1.2), and maybe the brighter ones of the subset of darker objects (which the color composition director can determine) ending at a few times 100 nit, e.g. 200 nit.

Indeed, in this mere elucidation example, the director has for his grading decided to select his first control point CP1 for deciding the luminance value of the painting on the HDR luminance axis (shown vertically). If this portrait was not strongly illuminated by the elliptical lamp (which is a strength he wants to make apparent to his viewers in this 2000 nit HDR video, yet not in a too excessive manner, or otherwise the portrait may distract from the action of the actors or presenters), the value of 200 nit is reasonable. Let's say that under normal levels of illumination (the average indoors illumination for this configuration of lamps as present in this scene) the portrait pixels would be given luminances of ~ 50 nit, now he may decide to map the average color of the portrait (or a pixel or set of pixels that gets clicked) to say 200 nit, for this HDR grading, to give an impression of extra brightness. A second control point CP2 may be used to determine the dark blacks (the poker). A good black value may be 5 nit. These two points already determine a first part of the first luminance mapping function Fs1 for this indoors position, a brightening segment F_Bri. One could determine e.g. a multilinear mapping like this, or a more smooth one snaking around or substantially following the multilinear curve (which is e.g. the tangent), e.g. with parabolic smoothening parts where line segments connect. As explained above, the flames in the fireplace are also objects of interest. In the previous sub-process we have already made sure the are captured in good quality. Now in the grading phase (which the image processing circuit 207 will constantly perform on the fly for each time sequential captured video image during the actual shoot, but for which now the best reference grading i.e. the function to use is established) the criterion for the color composition director is too make sure the flame has a nice HDR impact, but is not too excessively bright. The inter-object contrasts will depend on the choices for the other regions of the scene. So an additional, third control point CP3 can be introduced (e.g. by clicking on a displayed view showing the function and some (representative) luminances on the vertical/output axis and digital numbers on the horizontal/input axis) and the director can move it to set the desired flame luminance in the to be outputted HDR primary grading (i.e. ImHDR) at e.g. 600 nit. This establishes a second segment (F_diboos) with which one can dim or boost a second selectable sub-range of pixel luminances/colors (typically although color processing is usually 3D, the hue and saturation may be largely maintained between input and output, i.e. the ratios of the color components, changing only the luminance, i.e. the common amplitude factor for the 3 color components). To keep specification simple, the rest of the function can be determined automatically. E.g. segment of the darkest colors F_zer can be established by connecting the first control point with (0,0). For the uppermost segment one may e.g. select out of two options. This segment can continue with the slope of the F_diboos segment, yielding the F_cont segment, or it can apply an additional relative boost with F_boos to the very brightest colors, by connecting ADC output maximum (65535) to HDR image maximum (in this example the color composition director casu quo camera operator considering a 2000 nit ML_V HDR image being a good representation of the scenes of the shoot). This election of the brightest segment of the mapping function may be done depending on which object luminances are found in other positions of the total location of the shoot, to get better coordination of the various objects in the total movie or program (e.g. outdoors sunlit pixels luminance contrast compared to the elected flames luminances, and especially the elliptical lamp luminances). The decisions may also depend on which luminances are or are not present in various environments (or could temporarily be present, if one walks into the right part of the room with a mirror reflecting the outdoors environment e.g.), such as the elections of the clipping point. E.g., although not absolutely necessary, in this example it may be a good idea to make the very brightest objects in the various positions (i.e. the brightest parts of the lamps, even if some of those are street lights in a night scene), equal for all positions, e.g. 2000 nit in the example (note that normally as a graded version, e.g. the HDR output movie, one would have a fixed ML_V for the entire movie or program). But the specification of the functions allows also for the opposite desideratum: if one wants the street lights in night scenes outdoors to be only 1000 nit for some reason (e.g. less glare for the viewer on the darkest regions), that can be equally done by specifying, storing to memory, and loading for shoot a function Fs3 for nighttime outdoors shots which ends with e.g. a small vertical segment mapping the brightest digital numbers to 1000 nit HDR output luminance (on a 2000 nit ML_V first graded version output video). It is up to the creator of the video to decide how "perfect" his HDR looks should be, and consequentially how much effort he should spend on the pre-configuration of all cameras, and how good the one or more gradings coming out of the camera should already be (ready for display e.g.), or how much post-work is to be done, to get an even better looking grading according to the creator's desiderata. The basic techniques presented allow for such simple scenarios of only two position-dependent functions of a relatively simple (i.e. coarse grading) shape, up to many different functions for many different positions and shooting scenarios. But for elucidation of the principle, two examples suffice, as the skilled person can mutatis mutandis understand the other variants.

When moving to the next, outdoors position (again with the same basic capturing settings, in this example), now assuming in the Fig. 7 elucidation a daytime outdoors shot, determination of an optimal or desired second luminance allocation function Fs2 for this simpler mainly sunlit with shadows environment can be done faster and easier with only two control points (the third being implicit, i.e. not requiring user interaction, being positioned on the maximum of both axes). Now, as shown in the bottom graph of Fig. 7, the houses have e.g. a somewhat lower scene luminance ergo digital number, because a cloud has moved in front of the sun. In principle the present technologies can determine separate (extra) luminance allocation functions (and typically if desired secondary grading functions) also for these illumination situations (despite being at an existing position), but the idea is that in this approach this is not necessarily needed, since when well configured the lower values will scale nicely, showing a darkening which really occurred in the scene as a reasonable corresponding darkening in the output images, and their ultimate displaying (e.g. after a standardized display adaptation algorithm). I.e., when selecting a good mapping function to a good lesser sub-range of to be displayed image luminances, the sun coming out will result in an appearance of brighter objects, i.e. e.g. brightening by 2x in the HDR grading (depending on the slope of the mapping function for that sub-range of DNs, which in turn will typically depend on the elected ML_V of the output graded video), an vice versa the clouds coming back will dim the now in the shadow houses nicely, in the at least one output grading. In this scene, the color composition director may focus on two aspects of the grading(s). Firstly, we want a good value for the houses in the shadow (even if not able to actually measure both situations, the camera operator and director know there is a fixed relationship between sunlit and shadowed houses, since normally one doesn't go to the thickest possible clouds in the same sunny day shoot, so e.g. a 1/5^{th} slope can change a 10x scene luminance change into a 2x graded image luminance change). Since it are outdoors objects, those houses may be chosen brighter in the 2000 nit master HDR grading output than the indoors strongly lit portrait, so e.g. at 300 nit (on average). So they look about 200 nit darker than the houses when sunlit, and when seen from an indoors environment. Of course, in principle the director can decide to put more emphasis on the brightness of the portrait, and could even grade that part of the scene with a locally different function. But, although not per se excluded, such complicated grading would be atypical, at least for the primary grading output (for a fast and easy (single or multi) camera capturing optimization system). Although already graded in that the master e.g. 2000 nit HDR output video puts all object luminances in a position that is reasonable for HDR home viewing, there is typically still a relatively simple relationship with the relative brightnesses as captured in the digital numbers of the camera (though not as simple to be a fixed function). So if a 1000 DV scene object point measurement is lower than 25000 DV, whichever function is chosen the output nit value of the grading will also be lower, since the functions will be strictly increasing. Secondary gradings could in principle contain image-location-dependent mappings, although in practice it has been proven that for single image-source material (no mixing of different images, from different contributors), a single function for all pixels in an image irrespective their location normally suffices for several usage scenarios.

Note that the director can select the function for the second position by itself, i.e. independently, but it may be advantageous if the image color composition analysis circuit 250 has a circuit for presenting for display several, at least two, position-based grading situations. E.g., it may send to the display 253 a split view, where one can position a rectangle of half the image width over the captured master capturing RW of a previous position, to compare luminances of various objects in the grading of the present position. E.g., one may drag a selection of the part of the image containing the elliptical lamp and the portrait, to move it adjacent to e.g. a street lamp in the other grading of the other position (which may also be moved), to compared side by side those objects, making it easier to see how their internal luminances coordinate. E.g., the director can first select the right side of the indoors scene of Fig. 4, to compare the brightness appearance of the indoors objects of the fireplace, portrait, plant and walls, with the ground and houses and sky of the outdoors second position capturing, to judge whether e.g. the viewer would not be startled when quickly switching from a first position shot to a second position shot, in case the video later gets re-cut. Sometimes, due to the fast pace of modern productions, you have a constant to and fro switching between two positions, e.g. speakers, and that should not look like a disco strobe. Then he can shift and swap so that he can compare the brightness of the outdoor houses seen through the window in the indoors scene, with the outdoor houses and objects in outdoors shots. Note that if he also wants to compare indoors object luminance levels both in indoors and outdoors shots, then when using only one master capturing RW per position (instead of a few), he should ideally make sure he also gets some of the indoors objects in view (or he can mix a few of the outdoors capturing different objects in the half screen for comparing outdoors objects, with the indoors objects in the other half). In this example, we can have e.g. the stool which is somewhere in the corridor. It will get a luminance depending on what lighting is present in the corridor, and what time of year it is outside (e.g. summertime may have stronger sunlight). So during the discovery phase one may elect either to look only at indoors objects, and treat the outdoors objects as a second position, or already get some of those in the first capturings of the first position, and then determine the functions consequentially. The primary positions for coordination may be e.g. a place where most of the shots occur, e.g. in an auditorium for a business or educational movie, with only a few outdoors scenes cutting in.

Let's say the director wants the indoors objects seen from outside to look dark, but sufficiently well visible, which can be achieved by positioning them at e.g. 15 nit. Here we see again the importance of the grading functions, compared to a pure physical measurement. One could say that the indoors objects could be given the same digital numbers, using a single pre-establised set of capturing settings, whether being in view in an indoors or an outdoors shot. But for the viewer it will matter whether most of the pixels are indoors pixels (establishing a basic brightness look for the shot), or whether one only sees a few of those objects through an open window, the remainder of the image pixels imaging sunlit outdoors pixels. This fixes the elected F_diboos segment of the second luminance mapping function Fs2. The other two segments F_zer2 and F_boos2 can be automatically obtained by connecting the respective control point to the respective extremity of the ranges. If that function works sufficiently well for the director, i.e. creates good looking graded images, he need not further finetune it (e.g. by adding a tertiary control point), and can send it to the camera to store it in the function memory in the memory part of the second function. Although when using these examples one will not get the most perfect graded output imaginable, the point is that one can get a much better result than when using some simple fixed allocation function for all shots, yet still in a sufficiently simple manner to make it practical for many shooting scenarios (unless one doesn't know what environments one will encounter, like with an unpredictable race of various people through various places in the world, but even then one could do a pre-discovery setting of environments that probably look sufficiently similar to what will be encountered to get one or more graded outputs (e.g. 2000 nit ML_V HDR and 100 nit SDR) that look sufficiently good, and optimized).

It will often be enough to do re-gradings (both of the primary/master grading, and of secondary gradings where applicable, i.e. selected e.g. as parallel output video of the camera) with two, or maybe three control points, although the method or system can allow the director to choose as fine a function as he desires, by continuing to add further control points to change the shape of the function(s). But that also will depend on the type of shoot, e.g. how many cameras will e.g. have a static angle look on a more or less complexly lit location, etc. Also, it will often be enough to have only a few, even only two positions. One may e.g. create a "rough" grading situation which is sufficiently good for all brighter lighting environments (e.g. for all outdoors positions, irrespective of whether in an open area fully sunlit, or in a shadowy area between e.g. tall buildings), and a secondary one for all positions which are substantially darker, e.g. all indoors positions (which can be approximately 100x darker in the real scene, but need some adjusted grading anyway, which typically conveys somewhat of the relative darkening so the end-viewer can see -in all gradings ideally- some difference with the outdoors brighter capturings, but on the other hand both positions produce graded images in which all or most of the objects are well visible (i.e. not too dark and hidden, nor clipping), and ideally of well-coordinated brightness and color. When wanting to make the perfect HDR impression, one may want to fine-tune the various lighting situations of many different shooting positions, e.g. when having purposefully created specifically lit decors for the HDR look of the movie, but even when "accidentally" having various differently lit environments, such as a program about an escape room, to have this technical situation be captured in the best manner, even when not having some specific light impression in mind for the end gradings.

This initialization approach creates a technically much better operating camera, or camera-based capturing system. When starting the shoot, the user can focus on other aspects than the color and brightness distribution or composition, but still colorimetry has not been reduced to a very simple technical formulation, but now one can work with an advanced formulation which does allow for the desiderata of the human video creator, but in a simple short initialization pass.

Advantageously the method of in a video camera (201) setting a video camera capturing mode further comprises:
- determining by the color composition director for the at least two positions two respective secondary grading functions (FsL1, FsL2) for calculating from the respective master capturing (RW), or luminances of the first graded image, a corresponding second graded image (ImRDR); and
- storing the secondary grading functions (FsL1, FsL2), or parameters uniquely defining these functions, in a memory (220) of the camera,
- wherein the second graded image (ImRDR) has a lower maximum luminance than the first graded image.

The skilled person understands what the relationship would be between functions, between the e.g. secondary luminances, or lumas (via an elected EOTF) and the digital numbers, if one has a function relating the primary luminances or lumas and the digital numbers, and a function relating primary and secondary luminances or lumas, as that is simply relating input and output values along their range to determine the function shape. He would also understand how one can parametrize such a set of duplets, e.g. by the slope values of a multilinear approximation, etc. Sometimes it may be technically advantageous using the function which relates secondary luminances or lumas to primary luminances or lumas, rather than to DN's, since that function may be advantageously co-communicated as metadata, e.g. in an SL-HDR2 or even SL-HDR1 format (after inversion). But other applications may only desire the SDR output images, i.e. the pixel color matrix, without needing to communicate the function(s) which generated those images. So the functions FsL1 and FsL2 will then typically be used only internally in the camera, typically as long as some output from the present shoot may be necessary.

Some cameras need to output, for a dedicated broadcast e.g., only one grading, e.g. some HDR grading (lets say with 1000 nit ML_V, of the target display associated with the video images), or a classical Standard Dynamic Range (a.k.a. LDR) output. Often it may be useful if the camera can output two gradings, and have them already immediately in the correct grading. It may further be useful if those are already in a format which relates those two gradings, e.g. applicant's SL_HDR format (as standardized in ETSI TS 103 433). This format can output -as to be communicated image for e.g. consumer broadcast or narrowcast- a video of SDR images, and functions for calculating from the corresponding SDR image a e.g. 1000 nit HDR image. These functions may correspond to the functions of the present method/system, as explained below. One of the advantages is that one can then supply two categories of customers of say a cable operator, the first category having legacy SDR television, and the second categories having purchased new HDR displays.

So one then will determine a secondary graded video, e.g. an SDR video if the primary graded video was e.g. 1000 nit HDR. The secondary grading functions (FsL1, FsL2) may work directly from the master capturing RW, i.e. from the digital numbers, or advantageously, map the luminances of the primary grading to the luminances of the secondary grading. In the second alternative, during the setup phase one will determine for each location (and possibly for some orientations) a representative first graded image of luminances for all image objects, and a representative second image of luminances for those image objects (i.e. collocated pixels), and one will per luminance of one of the images determine a corresponding luminance of the other one of the images. One will then use this function to calculate on-the-fly a luminance-to-luminance mapping to incoming pixels of any captured and first graded image during the shoot, to obtain as secondary output image the secondary graded image. This will all be performed substantially at the same time as shooting, by the image processing circuit 207. Some people think the secondary grading should merely be a simple derivative of the primary grading, but one can also say both gradings can be equally important, and challenging.

Having such a configuration system for (/in) the camera, means that one can later, during the actual shoot, operate the camera given this configuration. This is enabled by method of capturing high dynamic range video in a video camera, the video camera outputting at least one (and possibly two or more) graded high dynamic range image with its pixels having allocated luminances, the method comprising:
- applying the method of in a video camera (201) setting a video camera capturing mode as described above;
- determining a corresponding position of the at least two positions (Pos1, Pos2) for a current capturing position;
- loading the corresponding luminance allocation function (Fs1) for that position from memory (220) of the camera; and
- applying the luminance allocation function (Fs 1) to map digital numbers of successive images being captured while capturing at the current position, to corresponding first graded images (ODR; ImHDR), and storing or outputting those images.

A corresponding position means that the camera operator (or another operator operating a second camera) will not stand exactly in the same position (or orientation) in the scene as was selected during the initialization. One must be able to shoot freely. It means that one is in the vicinity of the investigated and stored position, i.e. typically one is in the same lighting situation, e.g. in a same part of the scene. That can mean different things. Outdoors, under the same natural illumination, the whole world could be a set of corresponding positions, at least e.g. when the system is operated in a manner in which the color composition director has not elected to differentiate between different outdoors positions (e.g. when this technical role is actually taken up by the camera man, e.g. when the camera is being operated by and guiding a one person layman videographer). Indoors there can be more complicated illumination, because lamps can be everywhere, the rooms can have variable shapes, there can be light-blocking objects which give different shadows, etc. A good elucidation example is a shoot in which the director on purpose wants to shoot in one strongly lit room, one averagely lit room, and one dim room (which e.g. only gets indirect lighting through a half-open door from the adjacent averagely lit room). To have a maximum HDR appearance. With the present camera (or system of apparatuses comprising a camera) one can then professionally and accurately according to desire coordinate the luminances in one or more gradings of all those rooms, and then liberally walk through them, e.g. following an actor. Even if he opens the door somewhat further, if the system was well initialize for darker corners in the darkest room, one will still get both SDR and HDR gradings of good quality. The various embodiments will have further technical elements in the camera to be able to quickly yet reliably decide in which position, i.e. lighting situation, one resides at each moment of the shoot. Basically, the goal of the present system is to find that the light situation (i.e. not necessarily the lighting per se, let alone an average light level), but rather the aspect of the lighting which matters for the image representation, i.e. the light that travels from several regions and/or objects of the scene towards the camera, i.e. the scene luminance of the various object points that matters. It is not so much relevant that one sees exactly the same geometry of the objects, i.e. the same e.g. circular set of pixels in any capturing. Rather, it is important that the same, or largely similar, luminances occur to form the composition of regions in the captured, and later graded, images. Ergo, a geometric patch of pixel with a luminance distributed around L_obj, may in a later capturing (of what is seen as the same position) be shifted to the right because the camera operator has moved to the left (potentially halving the area if it partially moves out of the captured image area). Or the imaged region may become smaller if the camera operator moves backwards, or it may undergo perspective deformation, be partially occluded by objects in front of it when they suddenly appear by the camera operator stepping behind them, etc. So what is important is that some shape of luminances around L_obj will be in all those shoots, and for normal shooting, e.g. in a studio, one will not suddenly step so far away or come so close (given also the minimum focus distance of the lens) that the area will grow from being almost the entire image on the one hand, to a few pixels on the other hand. Even those scenarios will not necessarily be a problem for the present technologies, but then the impression for the viewer may not be perfectly maintained in the grading, which normally will not be a problem of sufficient concern. Various technical elements may help in the determination of this similarity. E.g., one can use image and/or object recognition methods, which should of course be of the type to reasonably recognize the situation of a position/location characterized by e.g. 5 major different luminance areas (e.g. flames, normal objects, dark objects in a shadow area, lamps, and a view to a sunny outdoors). In some scenarios already the mere presence of such sub-ranges of luminances may identify at least two majorly different positions, but more robustness can be achieved if it is also verified that e.g. a bright range object is between a dark and a middle brightness object. In addition, or alternatively, one can use other technical means which determine position, which would imply the same luminance compositions unless the scene has significantly changed (even explosions, will typically function within a set of surrounding luminances, and one can cater, either accurately or roughly, for even such occurrences with the present approach, which of course need not even be able to perfectly handle 100% of all possible shooting situations to improve on the fixed SDR approach, since e.g. for an explosion an atypical large amount of pixels could be allowed to clip, even in an impressive HDR grading).

A function can be stored in a data-structure together with a position information (and possibly other information relating to the function, e.g. a maximum luminance of the output range of luminances and/or an input range of luminances), which can take several coding forms. E.g., they may be labeled enumerated (position_1, position_2), or absolute, e.g. relating to GPS coordinates or other coordinates of a positioning system, and/or with semantic information which is useful for the operator (e.g. "basement", "center of hall facing music stage during play conditions", etc). Although not always necessary, it may e.g. be useful to have the accuracy of a differential global navigation satellite system, e.g. for indoors use and studio use with adjacent partial sets, or any positioning system of similar capabilities, such as centimeter or decimeter accuracy (although oftentimes an aggregate characterization with an accuracy of e.g. the order of a meter will also suffice). This data format can be communicated to various devices, stored in the memory location to be used in various user interface applications, etc.

Advantageously the method is used in association with a camera (201) which comprises a user interaction device such as a double throw switch, to toggle through function memory locations of stored positions of different illumination in a shooting environment, which when pushed in one direction select the previous position in a chain of linearly linked positions and when pushed in opposite direction selects the next position. A double throw switch is a switch that one can move in (at least) two directions, and which operates a (different) functionality for those two directions. E.g., in practice it may be a small joystick etc., whatever the camera maker considers easily implementable, e.g. typically on the side, or back of the camera.

This is a simple and very fast method relying on the user to quickly select a position. E.g., and especially with only a few locations, which order is easy to memorize, the camera operator can flick the switch right before entering the indoors area. Some embodiments may use e.g. summarizing brightness measures which start applying the new function from the moment the device actually sees a first capturing where the number of photo-electrons has considerably gone down (respectively up), which means at that capturing time the operator has walked into the position of less lighting (e.g. stepped through the door, and has now covering from the ceiling, side walls etc.; or in a music performance turns from facing the stage to facing the audience behind, which may need foremost a change in the secondary luminance mapping function to create e.g. a SDR output feed). With a few images delay, advanced temporal adjustment of the luminances can be enabled, in case a smoother change is desirable (e.g. taking into account how fast the outdoors light is dimming due to geometrical configuration of the entrance, or just in general regarding how abrupt changes are allowed, but in general there were not be annoying variations anyway (the system advantageously may yet need not do better than the regulation times of classical auto-exposure aglorithms); see below regarding longer-range transitions of lighting situations, such as in a corridor).

Advantageously, the camera (201) comprises a speech recognition system to select a stored luminance allocation function or secondary grading function based on an associated description of a position, such as e.g. "living room". This allows the camera operator to have his hands free, which is useful if he e.g. wants to use them on composition, such as changing the angle of view of a zoom lens. Talking to the camera uses another part of the brain, so there is lesser interference with key tasks. In case of a (even slightly) re-cut capturing, the camera operator can stand still for a moment when selecting the new location, and those images with speech will be cut out of the final video production. However for real-time measures may be in place so that the whispering of the camera operator is hardly recordable by the main camera microphones, which can be realized e.g. by having a set of beamforming microphones having their main reception lobe towards the camera operator, i.e. having an audio capturing lobe behind the camera (whereas the main microphone 523 will focus on the presenter or scene being acted in, i.e. mostly capture from the other side. Also other cameras in the scene can be positioned far enough from the whispering camera operator so that his voice is hardly recorded or at least not perceptible, and need not be filtered out by audio processing. The camera operator can train the whispered names of the locations whilst capturing the one or more high dynamic range images (o_ImHDR), and use well-differentiatable names (e.g. "shadowy area under the forest trees" being about the longest name one may want to use for quick and easy operation, "tree shadow" being better, if there are not too many positions needing elaborate description for differentiation, e.g. "tree border", or "forest edge" being another possible position where say half a hemisphere is dark and the other half brightly illuminating).

In systems or situations where that is not possible, other techniques (embodiments) can be used.

Advantageously the method (/system) uses some location beacons which can either be fixed in locations which are often used (like a studio) or hung up before the shoot (e.g. in a person's home which was scouted as an interesting décor), which may be simple beacons which e.g. give three different ultrasound sequences, or microwave electromagnetic pulse sequences to identify, starting e.g. on the second, and the camera (201) comprises a location determination circuit, such as based on triangulation. There may be also one beacon per position, and then when they are suitably placed the camera can detect from the arrival time after one second on the clock, which beacon is closer. Or the camera may emit its own signal to the beacon and await a return signal, etc.

One can also stick quickly flashing patterns of leds on the ceiling. If they are infrared, and the camera has separate infrared detection, it doesn't even matter whether they come in view (if the video sensor blocks IR). The pattern can identify the room, or a sub-area of the room etc.

The camera (201) may alternatively (or in addition) also comprise a location identification system based on analysis of a respective captured image in a vicinity of each of the at least two positions. Monitoring the amount of light at each position may be quite useful. An automaton can itself detect whether some measure of light summarizing the situation has sufficiently changed, or has come close to a situation for a position. In some situations (e.g. with complexly varying lighting, like in a discotheque or explosions etc.), one may want to rely on geometrical recognition of color (texture) patches. E.g. a red couch, or rectangular shape against a green wallpaper may be recognized (if the wallpaper has certain objects, e.g. printed flowers,, this will make identification easier), as existing in one room, but not e.g. outside. In areas where one often shoots this can be accurately trained. When doing a fast initialization, this information can still be quickly collected by the camera (as explained below). It often provides for a robust identification of the room. The advantage of this technique is that a good quality imaging sensor is already available, and possibly some image processing capability (which may be re-used for other purposes too). A disadvantage is that the more complex algorithms may need a dedicated processor or significant additional processing functionality and power to existing typical camera image processing functionality, but ICs are still becoming more powerful year upon year, so for some future cameras this may be an option (e.g. in a mobile phone, which is becoming a powerful computer anyway). It is expected that future devices like e.g. phones will have more processing capacity on board, possibly even a neural processor. Also, since cameras are already getting wifi and 5G connectivity more regularly, the identification of those stations (e.g. triangulation, time of flight) may also be used. If the image analysis processing is done by external means, e.g. in the cloud, or a computer on set, capability or upgradability of the camera may be of lesser importance. For identification of a shooting position a low quality low resolution communicated image may suffice.

The present innovative concepts, although also already quite useful for on-the-fly single camera capturing, may become even more useful and powerful for multi-camera shoots. It is advantageous if a method of in a secondary video camera (402) setting a video camera capturing mode of specifying output pixel luminances in one or more graded versions of output video sequences of images, comprising setting in a first video camera (401) a video camera capturing mode of specifying output pixel luminances in one or more graded versions of output video sequences of images, and communicating between the camera to copy a group of settings, including the iris setting, shutter time setting and analog gain setting, and any of the determined luminance allocation functions from memory of the first camera to memory of the second camera.

So e.g. a first camera man can with his camera discover the scene, and generate typical functions for several positions of interesting lighting in the scene. He can then download those settings to other cameras, just before starting the actual shoot. It may be advantageous if all cameras are of the same type (i.e. same manufacturer, and version), but the approach can also be used with differently behaving cameras, if some extra measurements are taken, ideally. E.g. if a second camera has a sensor with lesser dynamic range, e.g. it gets 20,000 pixels full well and gets in the noise already at 50 pixels, and can still set its behavior for e.g. the flames in the room in relation to pixel overflow. Of course this camera will then yield noisy blacks (however the brights of the video are already well aligned), but that could be solved by using an extra post-processing luminance mapping function which darkens the darkest luminances somewhat, and/or denoising etc. If one must work with cameras which really deviate a lot (e.g. a cheap camera to be destroyed during the shoot), one can always use the present method twice, with two camera operators independently discovering the scene with the two most different cameras (and other cameras may then copy functions and basic capturing settings based on how close they are to the best respectively worst camera).

Advantageously the method of in a secondary video camera (402) setting a video camera capturing mode has one of the first video camera and the second camera which is a static camera with a fixed position in a part of the shooting environment, the other camera being a moveable camera, and either copying the luminance allocation function for the position of the static camera into a corresponding function memory of the movable camera, or copying the luminance allocation function in the movable camera for the position of the static camera from the corresponding function memory of the moveable camera to memory of the static camera.

This can be in a classical setup for e.g. studio broadcasting (i.e. studio camera; but it could also be a static camera in field production of e.g. a sports event), in which some cameras are positioned at convenient places on the studio floor in front of the décor (set, scenic design), e.g. to capture parts of the set, or speakers from different directions, but also e.g. a fixed camera can be attached to the ceiling of a room during a movie shoot for a bird eye view, etc. If that static camera has all, or the most relevant, objects in view of e.g. the living room with adjacent kitchen (which may be considered a single free range environment for the actors), one can copy the function of the static camera to the dynamic cameras that may also come in to shoot there (or at least a part of the function of the static camera is copied, e.g. if everything but the kitchen window is determined by the static camera, that part of the e.g. secondary grading curve may already form the first part of a secondary grading curve for a dynamic camera, but the dynamic camera from its own scene discovery may still itself determine the upper part of the luminance mapping function corresponding to the world outside the window 410, etc.). Vice versa, a dynamic camera operator (which role may be performed either by the color composition director when loading determined functions to one or more cameras, or by a camera operator when copying at least one function from his camera) may walk past some static camera and copy at least one suitable function into it (and typically also basic capturing settings, like an iris setting etc. for that position). In a more advanced system the static camera may rotate, and then e.g. two functions may be copied, one useful for filming in the direction of the kitchen (which will or may contain outdoors pixels), and one for filming in the direction of the hearth). This may either be done automatically, by adding a universal direction code (e.g. based on a compass) to a function data structure, and then the static camera can decide for itself what to use in which situation, e.g. by dividing the angles based on which side from a direction in the middle of the two reference angles the static camera is currently pointing to, or it may be indicated to the static camera what to use specifically under which conditions by the camera operator via user interface software (e.g. the standard camera may communicate its operation menu to the dynamic camera, so the operator can program the static camera by looking at options on the display of the dynamic camera).

One advantageous manner of embodying the innovative concepts is in a multi-apparatus system (200) for configuring a video camera, comprising:
- a video camera (201) for which to set a capturing mode of specifying output pixel luminances in one or more graded versions of output video sequences of images to be output by the video camera to a memory (208) or communication system (209),
- wherein the camera comprises a location capturing user interface (209) arranged to enable an operator of the video camera to move to at least two positions (Pos1, Pos2) in a scene which have a different illumination compared to each other, and to capture at least one high dynamic range image (o_ImHDR) for each position which is selected via the location capturing user interface (209) to be a respresentative master HDR capturing for each location;
- an image color composition analysis circuit (250) arranged to receive the respective at least one high dynamic range image (o_ImHDR) and to enable a color composition director to analyze the at least one high dynamic range image (o_ImHDR), to determine
- a) a region of maximum brightness of the image, and based thereupon at least one of an iris setting, a shutter time, and an analog gain setting for the camera and
- b) via a function determination circuit (251) for at least a respective first graded image (ODR) corresponding to the respective master capturing, a respective luminance allocation function (FL_M) of digital numbers of the master capturing to nit values of the first graded image (ODR) for the at least two positions; and
- wherein the camera comprises a functions memory (220) for storing the respective luminance allocation functions (Fs1, Fs2) for the at least two positions, or parameters uniquely defining these functions, as determined by and received from the image color composition analysis circuit (250).

Instead of all components residing in a single camera (which is i.a. good for ultimate portability, if e.g. a one man team wants to explore an environment e.g. in a Urbex shoot), it may be advantageous if some of the features reside in e.g. a personal computer. These have on the one hand the benefit a general significant amount of computing power, with the possibility of installing various software components, but on the other hand one may connect a larger better quality grading monitor, and may more easily shield it from surround light (or even put it in a dedicated darkened grading booth quickly built up along the scene, or in an OB truck). Capturing mode may in general mean how to capture images, but in this patent application specifically points also to how the capturing is output, i.e. which kind of e.g. 1000 nit HDR videos are output (whether the darkest objects in the scene are represented somewhat brighter or vice versa kept nicely dark e.g.). I.e. it involves a possibility of roughly or precisely specifying -for all possible object luminances that one could see occurring in the captured scene-corresponding grading-optimized luminances in at least one output graded video. Of course one may want to output several different graded (and typically differently coded, e.g. Perceptual Quantizer versus Rec. 709 etc.) videos, for different dynamic range uses. Thereto the camera needs new circuitry to enable its operator to walk to some environment of representative lighting, and specify this, by using a capturing user interface 210 for specifying the initialization capturing and all data from the camera side (the image color composition analysis circuit 250 residing e.g. in the personal computer, may operate with a third user interface, the mapping selection user interface 252, with which the color composition director may specify the various mapping functions, i.e. shift e.g. control points as explained with i.a. Fig. 7). On the one hand he will capture a representative image there (a good capturing being typically the master capturing RW), and on the other hand he will specify the corresponding position, at least by minimal data such as an order number (e.g. location nr. 3), but possibly with more information, such as semantic information that can later be used more easily in the various embodiments of the selection user interface 230. This needs to be managed by operation software of the capturing UI, since the end result is to have on the one hand basic capturing settings (iris etc.) for the camera to later operate in this lighting environment, and on the other hand functions, to be able to calculate, starting basically from a raw capturing of digital numbers, the various graded videos and their pixel luminances. This needs to be managed to be stored in corresponding positions of a functions memory 220 (n.b. the basic capturing settings may also be stored there, or in some other memory). From there onwards any of the originally captured images from the initialization phase have become irrelevant, and all (typically coordinated) information regarding the optimal shooting in the various positions is in the stored basic capturing settings and functions, and the camera is ready for the actual shoot (i.e. the recording of the real talk show, or shoot of a part of a movie, etc.). The user interface which then becomes important is the selection user interface (230), with which the camera operator can quickly indicate to which location-dependent setting the camera should switch.

Useful embodiments of the system for configuring at least one video camera (200) will have a function determination circuit (251) which is arranged to enable the color composition director to determine for the at least two positions two respective secondary grading functions (FsL1, FsL2) for calculating from the respective master capturing (RW) or the first graded image (ODR) a corresponding second graded image (ImRDR), and the camera (201) being arranged to store in memory for future capturing those secondary grading functions (FsL1, FsL2). If the camera operator toggles to a new position, both the primary function (Fs 1) for calculating the first graded output video from the captured DNs, e.g. a 3000 nit HDR master output, and the secondary function (FsL1) for that position for calculating the secondary e.g. SDR output video will be selected for the camera operation for the shot located in that position. E.g. toggle up may be a first position, toggle right a second, toggle down a third, and toggle left a fourth, which will be a very user friendly operation sufficient for many shooting scenarios, but if more positions are required one can allocate smarter selections to the user action, e.g. toggle up being a next position depending on in which position the camera operator was shooting, and toggle down e.g. meaning walking to a room on the other side of the corridor. Or one can resort to more advanced automatic or semi-automatic systems, e.g. with audio (if the camera operator e.g. has to physically walk to a far away room before continuing the shooting, he has more time to change to the new position's pre-established data, than when it must be changed continuously by a running camera man, e.g. running behind an actor along the stairs).

A typical secondary grading for any high dynamic range primary graded video is an SDR graded video, but a secondary HDR video of lower or higher ML_V is also possible. The innovative camera will at least have the memories for these various functions, and the management thereof, and in particular during operation the selection of the appropriate function(s) for producing high quality graded video output. The innovative part in the computer, or running in a separate window on a mobile phone (primary which also functions as the camera, or secondary which doesn't function as a camera) etc. , will apart from the correct communication with the camera for the various positions have the setting capabilities including user interface typically (unless the system works fully automatically) of the appropriate settings and functions for the camera.

So the novel camera either itself comprises a system for setting a video camera capturing mode of specifying output pixel luminances in one or more graded versions of output video sequences of images, or is configured to operate in a such system by communicating e.g. a number of HDR capturings to a personal computer and receiving and storing in respective memory locations corresponding luminance mapping functions, and the camera has a selection user interface (230) arranged to select from memory a luminance mapping function or secondary grading function corresponding to a capturing position.

Various useful embodiments of the novel camera may be inter alia (the various devices of interaction being potentially combined in high end camera, for selectable operation or higher reliability):
A camera comprising a user interaction device such as a double throw switch (249), to toggle through function memory locations of stored positions of different illumination in a shooting environment, which when pushed in one direction select the previous position in a chain of linearly linked positions and when pushed in opposite direction selects the next position.

A camera (201) comprising a speech recognition system, and preferably a multi-microphone beam former system directed towards the camera operator, to select a stored luminance allocation function or secondary grading function based on an associated description of a position, such as e.g. "living room".

A camera (201) comprising a location and/or orientation determination circuit, such as the location determination being based on triangulation with a positioning system placed in a region of space around the at least two positions, and such as the orientation determining circuit being connectable to a compass.

A camera (201) as claimed in claim 12, 13, 14 or 15 comprising a location identification system based on analysis of a respective captured image in a vicinity of each of the at least two positions.

This camera will typically identify various colored shapes in the different locations, based on elementary image filtering operation such as edge detection and feature integration into clearly distinguishing higher level patterns. Various image analysis versions are possible, of which we elucidate a few below in the section on the details of the figure-based teachings.

Whilst sampling a position, the camera operator may scan the environment somewhat, like e.g. capturing images towards angles around a main direction, and aggregating as if capturing with a wide angle lens.

### BRIEF DESCRIPTION OF THE DRAWINGS

These and other aspects of the method and apparatus according to the invention will be apparent from and elucidated with reference to the implementations and embodiments described hereinafter, and with reference to the accompanying drawings, which serve merely as non-limiting specific illustrations exemplifying the more general concepts, and in which dashes are used to indicate that a component is optional, non-dashed components not necessarily being essential. Dashes can also be used for indicating that elements, which are explained to be essential, but hidden in the interior of an object, or for intangible things such as e.g. selections of objects/regions (and how they may be shown on a display).

In the drawings:
Fig. 1 (in Fig. 1A) schematically illustrates on the one hand how one or more camera operators can shoot in positions of various lighting condition, and according to the invention can investigate these positions to obtain corresponding good shooting conditions of the camera, i.e. a mode of specifying as desired for each location optimal values for various luminances that objects can have in the scene as represented in at least one output graded video. Fig. 1B also shows how one can can derive a better secondary graded output video (RDR) compared to simple technical formulation of lumas or luminances in an output video. Fig. 1C shows the same in a two dimensional graph, so that one can see better e.g. the concept of desired brightening of dark scene and consequently dark image objects;
With Fig. 2 we elucidate with typical generic components (related to roles of humans operating the various apparatuses) what the total system will typically do generically to come to a technically improved camera (201) ready to automatically use in such quite differing lighting environments as exemplified in Fig. 1; two separate apparatuses are shown, but the functionality of both can also reside in a single camera;
Fig. 3 shows more in detail how there can be several manners of creating an output video graded to a video maximum luminance of e.g. 700 nit, some methods being better and some being less appropriate, the better ones being what the present method, system, and apparatuses in particular novel camera cater for;
Fig. 4 is an example of a complex indoors lighting environment for explaining some concepts relating to one camera shooting at several positions or several cameras shooting at several positions, and also the potential influence of orientation at any position, which may also be taken into account in more advanced embodiments of our present innovation (the cameras shown can be the same camera operated at different times, or different cameras operated at the same time);
Fig. 5 illustrates a more advanced camera, with the location-dependent function creating circuitry and/or software integrated, and also some possible further circuitry for selecting the appropriate location-dependent function during any actual shoot, as well as an embodiment of a display in spectacles to be able to reasonably select the functions on the spot;
Fig. 6 is introduced to teach some elucidation examples of a user interface to define a luminance mapping function for creating a primary grading from the digital numbers of any raw captured video image;
Fig. 7 teaches some further insights on exemplary shapes of functions for a two-position shoot example (indoors versus outdoors), which is to be represented as a continuous video output being a 2000 nit ML_V HDR graded output video;
Fig. 8 is introduce to show how one can grade a secondary e.g. SDR grading when having made as a starting point a primary 2000 nit HDR grading;
Fig. 9 is introduced to schematically show an example of how a camera can detect a location by identifying certain patterns of color due to specific discriminating objects being present in one or more locations;
Fig. 10 elucidates some examples from scene (or capturing) to end display of a video production; and
Fig. 11 shows another exemplification of a coordination -given different stored capturing settings for two positions, e.g. the second position having one stop more opening for the iris whilst having the other exposure determining parameters identical for both positions- of the mapping functions to create e.g. a master HDR video version from timeline-merged (i.e. edit cut) shots taken at different times from those two positions.

### DETAILED DESCRIPTION OF THE EMBODIMENTS

**Fig. 1A** shows an example where a (conceptual) first camera man 150 and second camera man 151 can shoot in different positions (this can be the same actual camera man shooting at different times, or two actual camera men shooting in parallel, with cameras initialized and settings-copied as per the present innovations). An outdoors environment 101 may be quite differently lit for various reasons, namely both the level of illumination and the spread (i.e. non-uniformity) of illumination (e.g. one sun which falls on objects everywhere with the same angle in view of its distance, or a uniform illumination from an overcast sky), or equidistance light poles (113), yielding a lighting profile which drops illumination somewhat in the middle between the poles, etc. During nighttime the outdoors will typically be much darker (and contrasty, i.e. higher dynamic range) than indoors shooting, and during daytime it will typically be the other way around. Representative objects (which must get a reasonable luminance in the at least one graded output video) for the outdoors in this scene may e.g. be the house 110. Since gradings are supposed to be optimized for at least one displaying situation, one may not want e.g. houses that look overly bright, let alone glowing houses, unless intended because they are specifically sunlit, i.e. intended to be perceived by the viewer as such. Another critical object for which to monitor the output luminance are the bushes in the shadow 114. During daytime the street light elliptical area may have a similar luminance as the house, due to the reflection of daylight on the cover, but during nighttime it may be the brightest object (so much brighter in the scene that one may want dim their relative extra brightness (compared to the raw camera capturing ADC digital numbers), e.g. as a ratio to the brightness of an averagely lit object (like the house), in the graded output video so that they do not become too conspicuous or annoying in the ready to view grading).

Indoors objects, such as the plant 111, (or the stool 112), may have various luminances, depending not only on how many lights are illuminating the room, but also where they are hanging and where the object is positioned. But in general the level of lighting may be about 100 times less than outdoors (at least when there is sunny summer weather outdoors, since during stormy winter shoots some of the indoors objects may actually have a higher luminance than some outdoors objects).

Advanced embodiments of the present system may make use of variable definition of location-dependent functions (and location-dependent camera settings). For the basic embodiments, the idea is that it is sufficient to have one set of settings data (iris etc.; at least one luminance mapping function) for each position. One could in some situations elect the same values (iris opening etc.) for capturing for both capturing locations, but in general it may be advantageous to use different values which are on the one hand optimal for each location, and on the other hand advantageously optimal in relation to each other. In some advanced situation the director may select e.g. 2 functions, and perform various possible tasks. E.g. when in position nr. 1, the camera operator may still select between function 1, or alternative function 2, and deciding on the fly which function works best. This may be both useful when the functions realize small variations -i.e. have slightly differing shape- or large variations. It may be used to account for further variability in the position of the shooting environment, e.g. in a steam bath there may be more or less mist. Also, having an alternative function for a position allows over-writing of an elected situation. E.g. the color composition director may have selected two possible functions for the outdoors position, but at initialization not yet know which one works better during the shoot. The camera operator or the color composition (CC) director, or the camera operator in cooperation with the CC director may e.g. decide to swap the first version, which is currently loaded in primary memory for that position, and is the function which is selected by using the switch to toggle to this shooting position, may be swapped with the alternative function, which going forward becomes the primary function for this position for the selection UI. Or, the CC director may even finetune a function for a position, and load that one in primary position for the remainder of the shoot, making this the new fine-tuned on the fly grading behavior for this position (usually this should be done for small changes and moderation). Even with various functions to choose from according to capturing desiderata, the coordination of the functions for various places, and the ability to quickly associate one or a few functions per place, allow for very quick yet powerful capturing, in the sense of generating already quite good output gradings (i.e. correctly luminance-graded output images). Another typical example which can be classified under the category of (at least) two functions per (generalized) position is a corridor 102. Such long and narrow environments can have different lighting at various positions along the corridor. Of course one could treat those according to the basic system as just three different shooting positions (not really minding any relationship), but it is better to group them together in a generalized position, or group of positions. E.g., if the corridor is only lit by outdoors lighting from the front, it will gradually darken, but at a certain position there may also be lamps 109 on the ceiling, which will locally brighten again (and may be in view, so may be an separate object with pixel luminances than may need to be accounted for in the functions, and possibly the basic capturing settings). The camera operator can quickly toggle from one situation to the other, or better, the system (e.g. the camera itself) can do it automatically on the fly (typically after the exploratory test phase before the shoot has set the best capturing settings and functions).

E.g., the CC director may have decided together with the camera operator that a good first position of first representative lighting is near the entrance of the corridor (e.g. 1 meter behind the door and facing inwards if the shoot is going to follow an actor walking in), and a second representative position is a little before where the lamps hang (so we get some illumination from them, but not the maximum illuminance). During the shoot the camera can then behave e.g. like this. The camera operator flicks the switch to indicate he will be travelling/walking from the entrance position to the lamp-lit position in the corridor (a type of position, or function, can be co-stored for such advanced behavior, such as "gradual lighting", or "travelling"). The camera during creation of the at least one output graded video, e.g. a HDR version, can then use a continuously adjusted function between the two functions. The amount of adjustment, i.e. how far the to be used function has deviated from the entrance position function to the lamp-lit position function, can determine e.g. on where exactly the operator stands in the corridor, if the positioning embodiment allows for this (other possibilities, if delay allows for this, but oftentimes one wants delays in the order of 1 second or less for life production, but this could be done in offline production, is to first use for too many images the first function, but then when arriving at the second position correcting half of the previous images with gradually changing functions, between their first and second location-representative shapes).

These concepts can be better illustrated with Figs. 1B and 1C.

**Fig. 1B** shows how one might roughly want to map from a first representation of the image (PQ), e.g. a first grading, say an HDR grading, to a second (typically lower) dynamic range grading (RDR). Typically, in relatively simple HDR shoots, one would get some straightforward positions in the first representation, which are e.g. related to the raw capturing. E.g., one may set the luminances in this first representation equal to the digital numbers multiplied by a constant. Let's say the constant is such, that e.g. the largest digital number (e.g. power(2; 14)) gets mapped to 4000 nit. All objects will then fall on luminance positions (brighter or darker, along the vertical axis of all possible luminances between 0 and 4000 nit) depending on what luminances the objects had in the scene (so e.g. if the ADC images a 7000 nit luminance to its maximum digital number, the output of a scene luminance of 3000 nit, i.e. 43%, will become 1714 nit in the first automatically allocated HDR image). This may in many occasions be reasonably good for a primary output of a video camera, for a "master HDR video", though it is not necessarily the best primary graded output video (i.e. ImHDR). The issue of following simple video production rules may become more problematic when creating a video of lower dynamic range. The dotted luminance mapping lines represent a simple function (F1) such as e.g. a gamma-log function (which is a function which starts out shaped as a power law for the darker luminances of the HDR input, and then becomes logarithmic in shape for mapping the brighter input luminances to fit into a smaller range of output luminances). A problem with such mappings is that in general they will not do a good job of mapping to a smaller dynamic range, e.g. SDR. Some objects will look too dark when displayed on e.g. an LDR display, etc. The best looking images come out when a human (or at least an automaton which can calculate more advanced functions for each shot or lighting scenario, according to good principles of colorimetric image optimization, which are more sophisticated than just one fixed averagely good mapping function) creates an optimally shaped luminance mapping function Fopt. E.g. the plant shot indoors may be mapped too dark with a gamma-log function, so we want a shape that brightens more for the darkest image objects. That can be seen in **Fig. 1C****,** which shows the same in a 2D plot instead of on two 1D luminance axis (and for luminances normalized to a maximum of 1.0): the solid curve lies higher than the dotted one, and boosts pixel luminance as in the output image more, especially for the darkest objects. One may do further shape fine-tuning, e.g. dimming the luminances of the houses, so that a desired inter-object contrast DEL is achieved.

Although this Fig. 1C elucidates general principles, it can also elucidate how a gradual change in function may be calculated by the camera: if the dotted curve is good for the first position in the corridor, and the solid one for the second position, for in-between positions the camera may use of function shape which lies between those two functions (i.e. gradually moves from the first shape to the second shape, in steps). Several algorithms can be used to control the amount of deviation, as a function of traveled distance towards the second position (often perfect luminance determination is secondary to visually smoothened appearance). As we learn from the elucidations of the techniques in this description, not only e.g. the SDR grading, but all gradings which a camera may produce as output, benefit from good allocation of the various object luminances, and in particular a savvy coordination of luminances of objects in various locations of the scene(s) that may be shot, in a total video (indoors, outdoors, natural available lighting, switching on additional lighting, etc.).

**Fig. 2** shows conceptually parts of a camera, and the remainder of possible apparatuses in the initialization/mode setting system, for elucidating aspects of the new approach (the skilled person can understand which elements can work in which combinations or separately, or be realized by other equivalent embodiments).

The first, basic part of the camera was already described above, so we describe some further typical elements for the present new technical approach.

The capturing user interface 210 will cooperate with further control algorithms, which may e.g. run on control processor 241 (which processor that is, depends on what type of camera, e.g. slowly replaced professional cameras, or quickly evolving mobile phones, etc., in that a camera which has a general purpose processor can run this algorithm on the GPU, whereas another camera may have a dedicated ASIC or FPGA). It will at least manage the management of which position is being captured, what must be communicated to the exterior apparatus containing the image color composition analysis circuit 250 (exterior in this embodiment), what is expected to be received back (e.g. a luminance mapping function Fs2, communicated in a signal S_Fs, and maintaining in which memory location this function for e.g. the second position should be stored. Although at least some or all the functionality may be integrated in another similar circuitry, we assume the camera has a dedicated communication circuitry 240.

E.g., lets assume that both the at least one high dynamic range image (o_ImHDR) is output via this communication circuitry 240, as well as the basic capturing settings and the mapping functions are received i.e. input via this circuitry (the camera may further communicate via a dedicated cable to the lens, etc., but such details are irrelevant for understanding the present innovation).

Let's further assume that the connection is IP-based, and over WiFi, either with MIMO antenna 242 connected to the camera, or a USB to wifi adapter (other similar technologies can be understood, e.g. using 5G cellular, cable-based LAN, etc.). If a single, or a few images are sent, one does not need an error-resilient communication protocol like Secure Reliable Transport (SRT) or Zixi, but if the functionality is doubled from a Wifi communication which also communicates all images of the actual shoot, that may be useful.

Note also that for determining luminance mapping functions for grading, the received images need not be of the highest quality, e.g. resolution, and there may be compression artifacts. The actual shoot video output, which is delivered by the image processor 207 as ImHDR video images (and possibly in addition also ImRDR video images), may in many applications also already directly compressed, e.g. by using HEVC or VVC, or AV1 to a sink which desires AV1 coding, but some applications/users may desire an uncompressed (though graded) video output, to e.g. an SD card embodiment of video memory 208, or straight out over some communication system (NETW).

So with the aid of the image color composition analysis circuit 250, and via the mapping selection user interface 252, the CC director can watch on a monitoring display 253 what the gradings look like, either roughly (with the wrong colors) or graded. E.g. there may be a view showing LDR colors that result, when changing on the fly the shape of the secondary grading function FsL1, via the control points, and there may also be a second view showing a brighter HDR image, or just the LDR image alone. Some elucidation examples are given in the further figures.

The function determination circuit (251) may already give a first automatic suggestion for the luminance mapping function, or the secondary grading function, by doing automatic image analysis of the scene. The CC director may then via the UI fine-tune this function, or do everything himself starting from the master capturing RW or at least one HDR image. Applicant has developed autometa algorithms for e.g. mapping any HDR input image (e.g. with ML_V equal to 1000 nit, or 4000 nit) to e.g. typically an SDR output (RDR embodiment) image. The resultant luminance mapping function (functioning here as secondary regrading function) depends on the scene. For camera capturing the function shape would essentially depend on the lighting situation at any position. The final result is an output from the function determination circuit 251 of an optimized function (e.g. Fs1), communicated in a signal format S_Fs, which codifies the function e.g. with a number of parameters uniquely defining the shape (e.g., a parabolic function can be characterised by values a, b, and c, if its equation is Y_out= a*Y_in*Y_in + b*Y_in +c). Of course the camera and outside apparatus will then know this agreed function specification, e.g. because the computer runs an app of the camera manufacturer.

An example with well-working functions, which can work both for establishing the primary (e.g. 2000 nit ML_V HDR output video), and a secondary graded e.g. 200 nit video, is shown in **Fig. 6****.**

These images show both the underlying technical principles, but may also be actual views the director can see when specifying the functions by moving parts of their shape in three sub-windows on display 253. How he changes the shape is also a detail merely of the embodiments: e.g. if a slope of a segment needs changing, he may do that by dialing a wheel to increase the slope values, or much faster tap his finger to indicate where the endpoints of a linear segment or linear approximation or control line of the segment should be. Both options may be available in the same system, since some users may prefer the first and others the second option.

Let's say the mapping from digital numbers (DIG_IN) -which we have again for simplicity normalized to 1.0 (using this normalization it doesn't matter how many bits the ADC has, which indeed is usually only of secondary concern when defining optimal gradings, and optimal grading functions)- to a 2000 nit output HDR video, consists of two sequential mappings. First one can set a coarse mapping RC (in coarse mapping view 620), with say two linear segments at the outer ends (bright and dark input digital numbers), and a smooth segment in-between. The location of the three segments can be determined by setting arrows 628 and 629. This can happen, depending on which apparatus is used, e.g. by mouse dragging on a computer, or pen-clicking on a touch-sensitive screen connected to the camera, etc. The arrows can also (at least initially, before human finetuning) be set by e.g. clicking with the user's finger 611 on an object of interest OOI in a view of the e.g. master capturing, in image view 610, e.g. on the flames. The span of digital numbers (or luminances if the same algorithm is used to map from the luminances being input of the primary graded video ImHDR to the output luminances of the secondary graded video ImRDR) will be represented by the upper and lower arrow (i.e. a positioning of arrows 628 and 629). This may also fall on a part of the middle segment, if e.g. the autometa determined the three segments. The view of the coarse mapping 620 may also show small copies of the selected area, i.e. the fireplace, as copied object of interest OOIC, in a view of correctly value-positioned interesting objects 625. The CC director can toggle through, or continuously move through, a number of possible slopes (B1, B2) for the linear segments of the darker colors, starting from segment 621 which still grades those objects relatively dark, to arrive at his optimal segment 622, grading them brighter in the primary HDR output (ImHDR). This may be nice for the darkest objects, but perhaps the other critical object, the fireplace, when ends at a certain offset OF_i and a certain span of luminances DCON_i, or intra-object contrast, may not yet be optimal by such a coarse grading strategy.

Therefore, in a tertiary view window 630, the CC director may finetune the 2000-nit ranged luminances resulting from the coarse grading, to obtain better graded 2000 nit luminances, for the final output (the function to load to the camera will then be the composition function F2(F1(DN)).

The UI can already position the arrows (copied arrows 638 and 639 to correct new positions, the horizontal positions in the view 630 corresponding to the vertical axis positions in view 620), a second copied object of interest OOIC2 etc. to the correct new positions in the graph. E.g., a simple algorithm to adjust the contrast of the flames in to anchor the upper coarse graded luminance of the range of flames luminances (this becomes anchor Anch), and repetitively flick a button, or drag a mouse, to increase the slope of the segment below to a higher angle than the diagonal, so that at the bottom luminance of the range of flame luminances an offset DCO from the diagonal is reached. This creates a customizable second grading curve (CC), which yields in the final output 2000 nit grading (oHDR_fi) a larger contrast range DCON_fi than the DCON_i of the intermediate 2000 nit grading (oHDR_im).

Finally (returning to Fig. 2) in actual shoot operation, the image processing circuit 207 fetches the appropriate function(s) F_SEL e.g. Fs1, and if needed corresponding FsL1 of the secondary RDR grading, from memory, and starts applying it to the captured images as long as the shoot is being shot at that position (or actually in the vicinity of that position, as determined by camera operator or an automatic algorithm), until the shoot arrives at a new position. The setting of the iris and shutter may need to be done perhaps only one time right before starting the shoot, by means of iris signal S_ir, and shutter signal S_sh, originating e.g. from the camera's control processor, or passing through the communication circuitry, etc. Otherwise (and even if the values themselves need no change, the same values may be reset upon each position change determination) the correct values will be commanded via S_ir and S_sh when the camera operator toggles to the new position, and at substantially the same time as the new functions are loaded for calculating the one or more graded versions of the captured video as output.

As regards the signal format of the HDR output, and possibly the RDR output, a typical useful format may be Perceptual Quantizer EOTF (standardized in SMPTE 2084), for determining the non-linear R'G'B' color components, and then e.g. a rec. 2020-based Y'CbCr matrixing. And then e.g. VVC (MPEG Versatile Video Coding) compression, or keeping an uncompressed signal coding, etc. In case the secondary output is supposed to be legacy SDR, it can use Rec. 709 format. There may be further conversions to specific formats for communication, such as narrow range, packetization, metadata specification, possibly encryption, etc.

So the output video signal of any camera embodiment according to the present technical teachings will typically have had applied the first luminance mapping functions (Fs1, Fs2, ...), to yield for the first grading actual images (along some range of luminances up to some elected maximum ML_V of a target display associated with the video). I.e. each pixel has a luminance, which is typically encoded via an EOTF or OETF (typically perceptual quantizer, or Rec. 709). The secondary grading may also be added to the video output signal if so desired, but typically that will be encoded as functions (e.g. the secondary grading functions FsL1, FsL2 to calculate the secondary video images from the primary video images). Oftentimes the primary grading is a HDR grading and the secondary e.g. an SDR grading. But, e.g. for backwards compatible HDR broadcast, the primary grading may also be an SDR video, and the co-coded functions may be luminance upgrading functions to derive a HDR grading from the SDR graded video. In that scenario for full backwards compatibility the SDR luminances may be encoded according to the Rec. 709 OETF, but for partial backwards compatibility SDR luminances up to 100 nit may also be encoded as lumas according to the Perceptual Quantizer EOTF, etc.

**Fig. 3** illustrates further what is typically different, i.e. what is achievable, with our innovative technology and method of working, compared to some more simple approaches that one could apply, but which are of lesser visual quality.

Assume the camera operator has already established a reasonable capturing of the scene (i.e. good iris opening etc.), which is shown on the leftmost vertical axis. One could now make a e.g. 700 nit ML_V primary grading in three different manners (three different technical philosophies).

A first representation of the 700 nit image (NDR) can be formulated by mapping the maximum possible digital number of the camera (i.e. the maximum value of the ADC), to the maximum of the grading, which in the election of this example is 700 nit. All other image luminances will then scale proportionally (i.e. linearly, s*DN+b). This might be good if the capturing is to function as some version of a raw capturing (however even there one may prefer a non-linearity), e.g. for offline later grading like in the movie production industry, but it will not typically yield a good straight-from-camera 700 nit grading (typically some objects will be uncomfortably dark, due to the capturing of very bright scene objects). This is a situation one could achieve if one fixed all camera settings, i.e. basic capturing settings, and maybe a mapping function, once and for all, i.e. for the entire shoot, and the same for all positions.

Another possibility, which one may e.g. typically get when using some (potentially improved) variant of classical auto-exposure algorithms, which determine a new optimal exposure each time something changes in the lighting situation, is the second representation UDR. Now the usual objects, which will be the predominant luminance of most pixels, which will come out in an average-based exposure calculation, will put all Lambertian reflecting objects (under main or base illumination) on a same output image luminance position (seen on the luminance axis of all possible image luminances of the UDR image, the lit portrait coming out approximately as bright as the outdoor houses).

This is not what one ideally would want. One would want some difference in luminance (i.e. appearance to the viewer) DL_env, between the average object luminance in the stronger lit outdoors environment, and the indoors environment, and one may desire technology which enables a human to control this. I.e. one typically wants some coordination between the luminances captured in various positions, and an advanced controllable one. This is shown in the third representation (the optimized ODR), which functions as our primary HDR grading (imHDR), with an elected master grading maximum luminance ML_M equal to 700 nit (and with different shots from different positions optimally coordinated along that range). The dashed arrow shows one luminance being mapped by optimal luminance mapping function FL_M, which would be the optimal luminance function stored in the camera for the indoors position capturing the flames, as explained in the other paragraphs of this patent application.

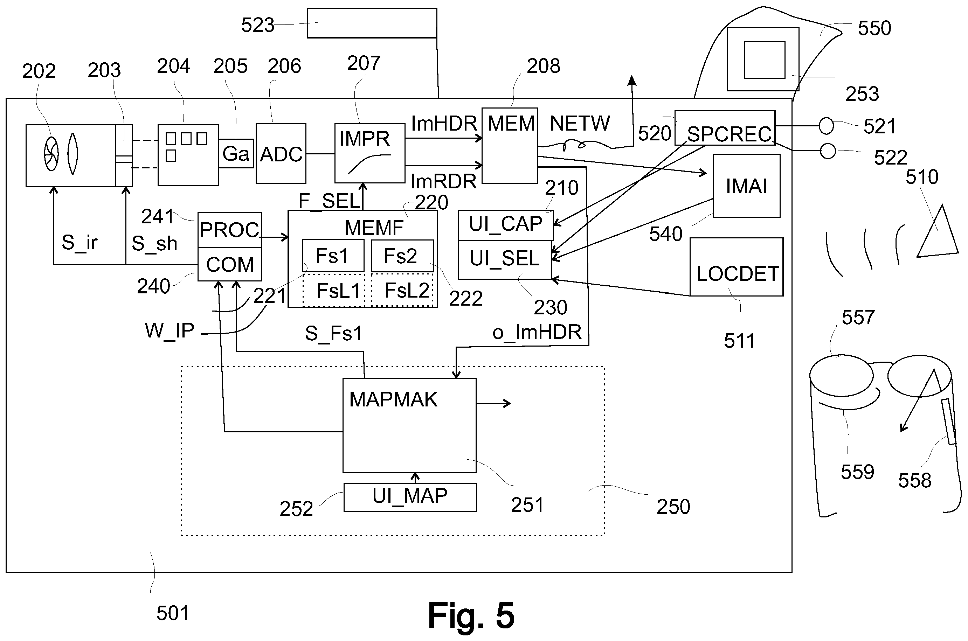

**Fig. 5** shows an elucidation of an advanced camera, which may have one or more position determining circuits. The basic parts (lens, sensor, image processing circuit) are similar to the other cameras. Here we show a viewfinder 550, on which the camera operator can see some views when functioning in the role of Color Composition (CC) director. This may not be as ideal a view as in a separately constructed grading booth constructed adjacent to the shooting scene, or even in the production studio, but sometimes one has to live with constraints, e.g. when shooting solo in Africa without a final customer yet. Some adopters would like to work like this, and the present embodiments can cater for it. Alternatively, for better resolution, surround shielding etc. the operator/CC director can for a short while put on spectacles 557, which may e.g. have projection means 558, and light shielding 559. What can be used is e.g. a vizor such as used in virtual reality viewing. What is also shown is speech recognition circuitry 520 or software, connected to at least two microphones (521, 522) forming an audio beamformer. The speech recognition need not be as complex as full speech recognition, since only a few location descriptions (e.g. "fireplace") need to be correctly and swiftly recognized. Whether the camera actually uses in-camera recognition algorithms, or uses its IP communication capabilities to let a cloud service or a computer in the production studio perform it, is a detail beyond the needs of this application's description.

What is also shown is an external beacon 510. This can be a small IC with antenna in a small box that one can glue to a wall, etc. Beacons can offer triangulation, identification if they broadcast specific signal sequences, etc. It will interact with a location detection circuit 511 in the camera. This circuit will e.g. do the triangulation calculations. Or for coarser position determination it may simply determine whether it is in a room, e.g. based on recognition of a signal pattern, and maybe timing of a signal. All those position identification systems can act similarly during the initial discovery phase of the control and specifically pre-setting of the camera or camera system (i.e. camera in a system with other apparatuses like e.g. a computer) as during the actual shoot, ergo, there may be the same or at least some of the same data paths for yielding basic or processed measurement data (e.g. an estimate of a position) to respectively the capturing (210) and the selection UI (230).

The video communication to the outside world via a network may e.g. be contribution to the final production studio (where the video feed(s) may be mixed with other video content e.g., and then broadcaster), or it may stream to cloud services, such as e.g. cloud storage for later use, or a youtube live channel, etc. This advanced camera also has the circuits for the determination of the functions included.

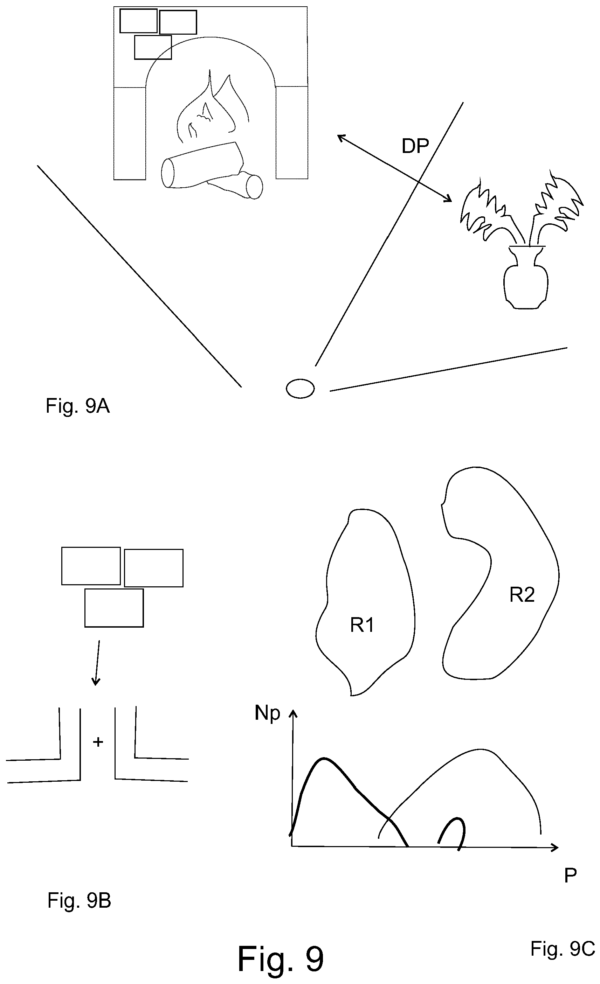

The image analysis circuit will be elucidated with Fig. 9. The idea of all these techniques is that during the life shoot position-dependent behavior of the camera still makes it easy to operate. For some shoots there is a focus puller who could e.g. via an extra small display timely select the shooting locations just before changing focus, but in some situations the camera man must do it all by himself (and he is already quite occupied following e.g. fast moving people or action, in a decent framing and geometrical composition), so it is good if he can rely on, or at least be aided by a number of technical circuits to determine position information (and the higher amount of work is done during the initialization phase of the scene discovery).

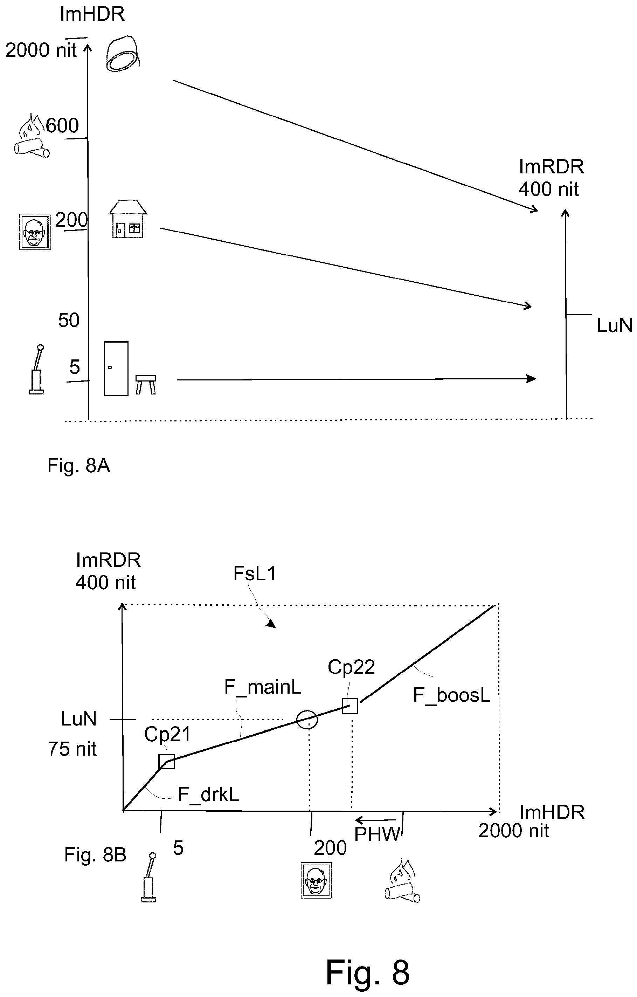

But first in **Fig. 8** we give an example of constructing (again easily and quickly) a secondary graded image version, e.g. an SDR output.

The considerations for grading a HDR primary grading, are typically to make all scene objects visually reasonable, or impressive (i.e. not too dark and badly visible, and/or not too excessive a brightness impact of one object versus another, the strength of the appearance of light objects, etc.) on a high quality image representation, which will be the usually archived master grading, which typically serves for deriving secondary gradings. So one specifies most objects already more or less correctly, luminance-wise, which can be illustrated with the darkest objects (and e.g. a keep darkest objects equal luminance on all gradings re-grading approach).

Now the secondary grading may primarily involve different technical considerations regarding how to best squeeze the range of object luminances in the primary grading, so that it nicely fits in the smaller dynamic range. Nicely fits means that one tries to maintain as much as possible the original look of the primary grading. E.g. one may balance on the one hand intra-object contrast which keeps sufficient visual detail in the flames, versus inter-object contrast, which tries to make sure that the flames look sufficiently brighter than the rest of the room, and are not of adjacent brightness. This may involve departing from the equal luminance concept and darkening the darkest object somewhat, to create the visual contrast. In any case, even if the technical and artistic details of curve construction may differ, the technical user interface and math behind it may be the same or similar (and the camera will similarly use such functions for in parallel calculating and outputting position-dependent secondary grading(s) RDR).

E.g., typical scene objects like the painted portrait may be given a normal luminance LuN in the RDR grading. Because the painting is lit, and also because the 400 nit ML_V max. luminance of the RDR grading easily allows for it, we may want to give the painting pixels luminances around 75 nit instead of ~50 nit. The circle in Fig. 8B now is not a control point, since in this strategy it is a point somewhere along a range of luminances or corresponding regrading function segment (the main segment F_mainL). It might be sufficient to use this segment for many of the colors, but in general the needs of compression desire a multi-segment curve for ImHDR-to-ImRDR re-grading. At least some of those may be so smoothly connected that it looks like a non-linear single segment. But in this example we also want to give some importance to the RDR grading result of the flames. So we may want to contrast-boost the flames somewhat. So the actual second control point Cp22 can be positioned some distance PHW from the average luminances or minimal luminance of the flame object, say in the middle compared to the painting. The selected e.g. linear segment for the main, normal object luminances will then continue on the lower end to this Cp22. In this example it was considered that boosting from Cp22 to (max_ImHDR, max_ImRDR), i.e. (2000, 400) was considered a good re-grading for not only the flames but also all other bright objects in this position of the scene (establishing boost segment F_boosL of this regrading function FsL1. Note that in this example we show the re-grading in the absolute axis system ending at the respective ML_V values in nits, rather than the normalized 1.0. This is not because one has to do one kind of grading in this domain and the other in the other, but to elucidate that all variants are equally possible. The segments of the darks of the scene (F_drkL) may again be automatically from where the CC director shifted his lower control point Cp21 to, and, if that is considered fine, he will not create another control point for those objects (e.g. instead of continuing it to (0,0), he may consider vertically raising the start to (0, Xnit) to brighten the darkest pixels). Fig. 8A roughly shows the desiderate for the RDR grading, by projecting a few key objects and their representative luminance or luminances, and Fig. 8B shows determination of an actual curve, i.e. an actual secondary grading functions FsL1, for the indoors, which may have been coordinated with the outdoors. We show linear segments for both the primary grading from the raw digital numbers and the secondary grading, but for any or both of those one or more segments may also be curved, e.g. have a slight curvature compared to the linear function. Linear functions are easy and when e.g. applied to the luminance channel only (whilst e.g. typically keeping hue and saturation, or corresponding Cb and Cr substantially unchanged) work sufficiently well, but some people may prefer curved segments for the grading curves. The grading may also be applied on transformations of the 3 color components, such as a matrixing, i.e. e.g. applied on the non-linear R'G'B' coefficients, or any color representation, as this is in general an aspect of the color science in the camera, but for understanding the principles of the new teachings, those details can be left to the knowledge of the colorimetrically skilled person.

**Fig. 9** shows some elucidation examples on how various embodiments of the camera's location identification circuit (540) can identify in which position, roughly or more precisely (and possible which orientation) the camera operator is currently shooting. The technology of image analysis is vast after decades of research, so several alternative algorithms can be used. We therefore illustrate this technical element only with some examples. Fig. 9A shows that in addition to merely determining "that" we are shooting in a room (often the basic capturing parameters and functions have been determined in such a manner that they are good for any manner of shooting in that room, and maybe adjacent rooms just as well, but not outside), advanced embodiments could also use 3D scene estimation techniques to determine where in the room and in which orientation the camera is shooting. The accuracy of this measurement need of course not be as high as for e.g. depth map estimation, so we can use many techniques, and cheaper techniques which require less calculations. We need not know exactly on centimeter accuracy where the center of the lens is located, because the mapping functions and basic capturing parameters are supposed to work identically whether 10% of the window is in view, or (e.g. zoomed) even 100% (i.e. all the pixels of the current indoors shot image are imaging sunlit outdoors objects). Here you see again the major difference in approach with classical auto-exposure techniques, which would of course yield totally different settings if one zoomed on the window (in fact, they would yield the outdoors settings, instead of the outdoors seen from indoors settings). So geometry can be determined, e.g. after having done basic object feature extraction and/or analysis, by calculating distances on the sensor of distances DP between objects, shifts of objects on the sensor relating to camera rotation, etc.

Since oftentimes we only need to recognize the room by recognizing a few typical objects, we focus on that with Fig. 9B and 9C.

Fig. 9B shows an example of an interesting, popping-out feature (i.e. the discovery can find it as interesting in the "blandness" or chaoticness of other features), the red bricks of the chimney. E.g., if red is a seldomly occurring color in this room, it may already be counted as a popping-out feature, at least a starting feature. These bricks can even be determined size-independently, i.e. position-independently, by looking for red corners on grey mortar (if size-dependent features are desired, like a rectangle, or e.g. the total shape of the fireplace, which may e.g. be coded as distances and angles of linear boundary segments or similar, then the algorithm can zoom the image or parts of it in and out a few times, or apply other techniques). So e.g. two adjacent bricks have been summarized as such adjacent patterns, in a manner which can be determined by (as non-limiting example) the G-criterion, or generalized G-criterion (see e.g. Sahli and Mertens: Model-based car tracking through the integration of search and estimation Proc. Of SPIE Conf. on Enhanced and Synthetic Vision 1998, p. 160-).

The idea behind the G-criterion, is that there are elements (pixels in image processing typically) with some properties, e.g. in a simple example of the fireplace a red color components, but it can also be complex aggregated properties resulting from pre-calculations on other properties. The element properties typically have a distribution of possible values (e.g. the red color component value may depend on lighting). And they are geometrically distributed in the image, i.e. there are positions where there are red brick pixels, and other positions where there aren't. Fig. 9C elucidates the concepts of the principles.

Say we take e.g. a measure which will be high for red bricks (saturated color), and low for unsaturated grey mortar. For the mortar, approximately R=G=B, and for the bricks R>> G,B
So we could take as discrimination property P e.g. the function R- (G+B)/2 (or maybe a ratio of R/(R+G+B)). One expects a "dual lobe" histogram, where one type of "object" lies around one value, e.g. 1/3, and another type around another value, e.g. ½< P <=1.

Now one selects two sampling regions R1 and R2 for a traveling sampling filter which checks several positions of the image.

Now one calculates the G-criterion as: 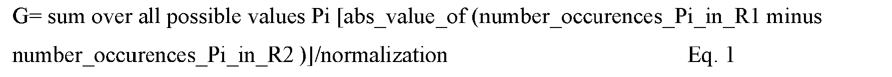 G= sum over all possible values Pi [abs_value_of(number_occurences_Pi_in_R1 minus number_occurences_Pi_in_R2)]/normalization Eq. 1

The idea is also to shape the regions sensibly, to what one would expect, so R1 could be the L-shaped mortar region around a brick, and R2 the piece of brick within it.

What will then happen when the G-criterion detector is positioned on such a brick boundary.

If we run the possible P value Pi from low to high, we see that low values around 1/3 will occur a lot in the mortar, so we have e.g. (theoretically) A_R1, which is the area or amount of pixels in the L-shaper region R1, if all pixels are perfectly achromatic. In R2, there will be no such colorless pixels. So the first term of the sum becomes A_R1. We take the size (in pixels, but not the shape) of the second region typically the same. Suppose the bricks have only maximally red pixels R= 255, G=B=0. Then there are a lot of Pi values which will give zero occurrence (Np) in either region, and not contribute to the sum. Finally, there are pixels which only occur in the red brick region R2, namely with value Pimax = 1. There will be again A_R2=A_R1 of those. So the sum will be 2*A_R1. If we take the normalization factor to be also 2*A_R1, the G-criterion will for detection give 1.0. If we position this analysis filter over all brick pixels, both regions will only contain P values equal to 1, ergo, only one bin will count A_R1 - A_R2 =0.

So the G-criterion detects what there is, and where, by yielding a value close to 1.0 if present. And 0 if not. The statistics of the G-criterion is somewhat complex, but the power is that one can input any (or several) properties P as desired. E.g., if the room is characterized by wallpaper with yellow striped on black, next to a uniformly painted wall, one can calculate an accumulating sum or derivative for the stripped pattern. E.g., if yellow is classified as +1 and blue as -1, one can calculate a P feature by measuring pixel colors at positions halfway a number of colored wallpaper bands, and obtain a local representative feature P= M1 + (-1)*M2+ M3 + (-1)*M4, where the binarized measurements M1-M4 depend on the underlying pixel colors, i.e. for the wallpaper one obtains P= 1 + (-1)*(-1)+ 1 + (-1)*(-1)=4. Any texture measure, or color measure, or geometrical measure can be constructed and used in the G-criterion. Also the shape of the sampling regions can elegantly determined at will (only the amount of sampled pixels should be the same for easy comparison and normalization).

The generalized G-criterion doesn't contrast a feature situation present in one location with a neighboring, e.g. adjacent location of the image, but contrasts with a general feature pattern. E.g. if a red patch is known to have P-values well above 1/3^{rd}, or for the subtraction above zero, one can contrast the occurring bins of various red colors with a reference bin of zero. I.e., whether that color patch occurs in the image or not, one can compare (per se) a sole red area R1 anywhere in the image with a virtual region R2 which consists of all Pimin=0 values, and may have a rectangular shape.

The G-criterion can just be a first phase, to select candidates, and further more detailed algorithms may be performed, in case increased certainty is needed.

So in general , upon initialization, the location identification circuit (540) ingests one or more images from this location, e.g. typically master capturings RW with the basic capturing settings for this location. It starts determining conspicuous features, such as e.g. rare colors, corners, etc. It can construct slightly more structured low level computer vision features for these conspicuous objects, e.g. the brick detector with the G-criterion. It may store several representations for these representative objects, such as e.g. a small part of the image to be correlated, a description of the boundary of a shape, etc. It may construct various mid-level computer vision descriptions for the position, and store these.

During the determination phase of the position during the actual shoot, the location identification circuit (540) will do one or more such calculations, to establish the estimate of which position the camera resides in. It may cross-verify by doing some extra calculations, e.g. checking whether this indoors position is not perhaps somewhere in the outdoors scene, by checking some color-texture-patterns typical for the outdoors on a ingested copy of some of the presently captured images.

Note that such an identification of typical structures in anything, here images of various locations, is also typical of what one would find learned in the hidden layers of a neural network. Indeed, as NN processors are becoming more common and cheaper, one could use such an IC, at least for situations where one can afford the effort of doing sufficient learning (e.g. if one is going to use this location of these locations often, because you are e.g. the company communication officer, and this is your company campus). But other variant may rely on the user just capturing a few images of a scene which he considers representative for identification (which humans are very good at, e.g. he will capture an image of the portrait and below the fireplace, which is something unlikely to be seen in the forest outside), and then when he starts drinking his coffee before the shoot, the circuit's algorithms start doing the straightforward (non-learned) statistical image analysis.

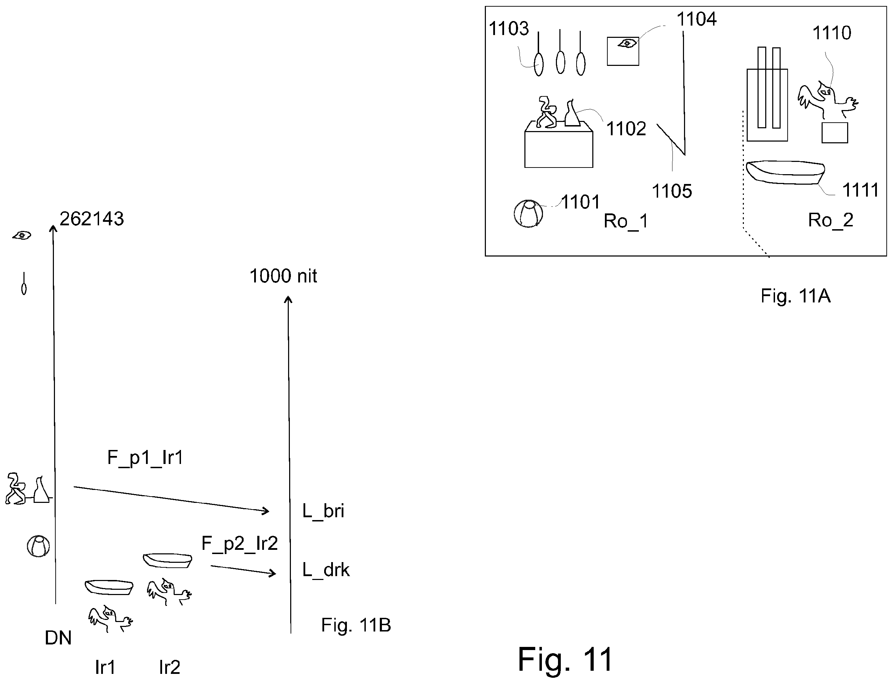

Fig. 11 shows another example of how one can coordinate all capturing (mode) parameters, to yield, in an easy manner an a possibility of on-the-fly shooting, a good HDR video output. The basic capturing settings, and the various functions, will typically be coordinated at least in the sense that, when setting the camera to its behavior for each position (i.e. when setting the iris, and the mapping function to obtain e.g. graded HDR lumas or luminances from the digital numbers being captured), the result will look good when directly displaying the entire shoot, i.e. all sequential shots at various positions. We have illustrated this with another example where e.g. one camera operator can freely walk between a (strongly) lit first room (Ro_1) and a dark second room (Ro_2). This second room's objects will typically be lit indirectly through the opening in the wall (1105), e.g. open doors, which also may function as a viewport to a part of the other room if the camera is in the first room and pointed in that direction (and the camera man can use it to move between rooms). For the ultimate near-infinite capturing dynamic range of the future, there may be no difficulties in the basic capturing (i.e. no critical choice for the values of iris opening etc.), and then only the mapping functions would be pre-defined (since one still must make e.g. a 800 nit ML_V output video, and/or a 1500 nit video, and/or a 3000 nit video etc., from the digital numbers being captured at each moment, given the one or more basic capturing settings values). But in this example we consider we have at least one near future camera with less perfect capturing dynamic range, and, no opportunity or explicit choice regarding the non-use of fill lighting in the dark second room. In the first room, in the discovery initial phase the CC director and/or camera operator considered that of course the sun, and at least some of the sunlit clouds (1104) outside a small window may clip above full pixel well and maximum digital number DN (which was considered here from an 18 bits ADC). So the region of maximum brightness is determined to be the set of pixels (respectively their luminances) just darker than those pixels that may have luminances all clipped to the same maximum value (in this example some parts of the clouds in which one still wants to code some grey value variation of the cloud luminances). This luminance of the clouds will form a good aggregated maximum value, since the other positions have no scene regions or objects of importance of higher luminance. In various gradings, or at least the sole HDR video output, this aggregated maximum may be mapped upon the TDML value ML_V. There are bright lights (1103) brightly illuminating some key objects 1102 (e.g. silverware) on a table. The bright lights may be reasonably captured without clipping, as well as all other objects in the lit room up to the averagely lit object 1101. In the dark second room, when using the same basic capturing settings, e.g. first iris value Ir1, the hollow object 1111 may be captured with small digital numbers, but still sufficiently faithfully (i.e. typically with little noise). However, the monster 1110 hiding in the shadow behind something, may be captured too dark in this capturing setting to be ideal. We could therefore set the camera memory values so that each time the camera man starts shooting in the second room (not necessarily towards the camera room, since in such a partial view surrounded by much brighter pixels from the first room it may be okay if one doesn't see to many details from the dark room), a larger iris opening Ir2 is used (e.g. 2x more open). So the mapping towards 1000 nit master HDR video output of anything in the first room will occur with a function for the first position (indicated in the function naming by p1), and with its iris setting, i.e. the first iris value Ir1, i.e. it will use function F_p1_Ir1, for which one input/output pair of values is shown from the digital numbers range to the range of possible luminances in a 1000 nit HDR grading. Similarly, other digital number values will map to other output luminances, together forming typically a strictly increasing mapping function. When shooting in the dark room, we could define a function starting from digital numbers as they would occur with the first iris setting, but we know we will use the DNs as getting captured with the second iris setting Ir2, which was chosen to be optimal for that room because it captures the darkest objects without noise, and the brightest objects are not present (if we point the camera towards first room objects through the door opening, we will normally not see the outside world through the window, and not too much of the bright room, so if something very high scene luminance clips that may not be too much of an issue, otherwise one may want to optimize the total set of luminances in the shooting environment together, potentially losing some quality of the darkest objects due to the noise only when shooting in the position which is "second-room-rotated-to-opening" but that would also in general be okay because then when doesn't have the monster in view, and if the very darkest and very brightest pixel are going to be displayed together on a display screen the viewer is not going to see the minutest details anyway). The shape of the function for the second room position F_p2_Ir2 will be different when starting from Ir2-based digital numbers than from Ir1-based DNs, but their relationship will be that during the initial phase the CC director has specified that the dark room objects, such as the hollow object 1111, say a tub, needs to have pixels of luminances around some dark luminance L_drk, which has a certain value as desired, and in particular is an amount or ratio darker than a bright luminance L_bri for the bright room object pixels. So we see from this elucidation how the discovery phase can coordinate all needed values, for two or more shooting positions, to ultimately obtain coordinated graded luminances, making the actual shoot liberal and without worries about the colorimetrical issues of the output video, or video versions. The various sub-ranges of characteristic scenes regions for the first position, will be coordinated by putting them at certain distances from sub-ranges of characteristic regions for the second position, at least for some sub-ranges, which is in practice done via the determination of the function shapes.

The algorithmic components disclosed in this text may (entirely or in part) be realized in practice as hardware (e.g. parts of an application specific IC) or as software running on a special digital signal processor, or a generic processor, etc.

It should be understandable to the skilled person from our presentation which components may be optional improvements and can be realized in combination with other components, and how (optional) steps of methods correspond to respective means of apparatuses, and vice versa. The word "apparatus" in this application is used in its broadest sense, namely a group of means allowing the realization of a particular objective, and can hence e.g. be (a small circuit part of) an IC, or a dedicated appliance (such as an appliance with a display), or part of a networked system, etc. "Arrangement" is also intended to be used in the broadest sense, so it may comprise inter alia a single apparatus, a part of an apparatus, a collection of (parts of) cooperating apparatuses, etc.

The computer program product denotation should be understood to encompass any physical realization of a collection of commands enabling a generic or special purpose processor, after a series of loading steps (which may include intermediate conversion steps, such as translation to an intermediate language, and a final processor language) to enter the commands into the processor, and to execute any of the characteristic functions of an invention. In particular, the computer program product may be realized as data on a carrier such as e.g. a disk or tape, data present in a memory, data travelling via a network connection -wired or wireless- , or program code on paper. Apart from program code, characteristic data required for the program may also be embodied as a computer program product.

Some of the steps required for the operation of the method may be already present in the functionality of the processor instead of described in the computer program product, such as data input and output steps.

## Claims

1. A method of control of a video camera (201) comprising setting a video camera capturing mode of specifying output pixel luminances for several positions in a scene to be captured, in graded output video sequences of images, which graded output video sequences have a maximum pixel luminance, comprising:
- an operator of the video camera during an initial scene discovery phase moving to at least two positions (Pos1, Pos2) in a scene which have a different illumination compared to each other;
wherein for a first position (Pos1) a first set of iris setting, shutter time, and analog gain setting is determined, and for a second position (Pos2) a second set of iris setting, shutter time, and analog gain setting is determined
wherein the first set is determined so that pixels of a first bright object (410) captured in the first position capture below pixel well overflow, and the second set is determined so that pixels of a second bright object (420) captured in the second position capture below pixel well overflow;
wherein the determination is performed on the basis of at least one
high dynamic range image (o_ImHDR) for each of those at least two positions of the scene, which is determined by applying a mapping function to digital numbers (DN) from an analog-digital converter as captured in a master capturing (RW);
storing said first set of iris, shutter time and analog gain settings - for an estimate of the first position from a position identification system, and storing said second set of iris, shutter time and analog gain settings for an estimate of the second position from a position identification system;
wherein the method further comprises:
- determining a first position graded image (ODR) for a first master capturing of the first position, which comprises determining a first adjustable luminance allocation function (Fs1), for mapping digital numbers of the first master capturing to nit values of the first position graded image (ODR), and determining a second position graded image for a second master capturing of the second position, which comprises determining a second adjustable luminance allocation function (Fs2), for mapping digital numbers of the second master capturing to nit values of the second position graded image; and
- storing the first and the second luminance allocation functions (Fs1, Fs2) for the at least two positions in respective memory locations (221, 222) of the camera.

2. The method of control of a video camera (201) as claimed in claim 1, further comprising:
- determining for the at least two positions two corresponding secondary grading functions (FsL1, FsL2) for calculating from the respective master capturing (RW) or luminances of the first graded image a corresponding second graded image (ImRDR); and
- storing the secondary grading functions (FsL1, FsL2)in a memory (220) of the camera,
- wherein the second graded image (ImRDR) has a lower maximum luminance than the first graded image.

3. A method of capturing high dynamic range video in a video camera, the video camera outputting at least one graded high dynamic range image with its pixels having allocated luminances, the method comprising:
- applying in an initial scene discovery phase the method of setting a video camera capturing mode as claimed in claim 1 or 2; and subsequently during the capturing of the video:
- determining a corresponding position of the at least two positions (Pos1, Pos2) for a current capturing position;
- loading the corresponding luminance allocation function (Fs1) for that position from memory (220) of the camera; and
- applying in mage processing circuit (207) the luminance allocation function (Fs1) to map digital numbers of successive images being captured while capturing at the current position, to corresponding first graded images (ODR; ImHDR), and storing or outputting those images.

4. The method as claimed in claim 3 in which the camera (201) comprises a user interaction device, such as a double throw switch (249), to toggle through function memory locations of stored positions of different illumination in a shooting environment, which when pushed in one direction select the previous position in a chain of linearly linked positions and when pushed in opposite direction selects the next position, and fetching from memory for the image processing circuit (207) the luminance allocation function corresponding to the selected position..

5. The method as claimed in claim 3 in which the camera (201) comprises a speech recognition system to select a stored luminance allocation function or secondary grading function based on an associated description of a position, such as e.g. "living room".

6. The method as claimed in claim 3 in which the camera (201) comprises a location and/or orientation determination circuit, such as based on triangulation with a positioning system at least temporarily placed in a region of space around the at least two positions.

7. The method as claimed in claim 3 in which the camera (201) comprises a location identification system based on analysis of a respective captured image in a vicinity of each of the at least two positions.

8. A method of control of a secondary video camera (402) setting a video camera capturing mode of specifying output pixel luminances in one or more graded versions of output video sequences of images, comprising setting in a first video camera (401) a video camera capturing mode of specifying output pixel luminances in one or more graded versions of output video sequences of images as claimed in claim 1 or 2, and communicating between the camera to copy a group of settings, including the iris setting, shutter time setting and analog gain setting, and any of the determined luminance allocation functions from memory of the first camera to memory of the second camera.

9. The method as claimed in claim 8, in which one of the first video camera and the second camera is a static camera with a fixed position in a part of the shooting environment, and the other camera is a moveable camera, and either copying the luminance allocation function for the position of the static camera into a corresponding function memory of the movable camera, or copying the luminance allocation function in the movable camera for the position of the static camera from the corresponding function memory of the moveable camera to memory of the static camera.

10. A system (200) for configuring a video camera, comprising:
- a video camera (201) for which to set a capturing mode of specifying output pixel luminances, for several positions in a scene to be captured, in graded output video sequences of images to be output by the video camera to a memory (208) or communication system (209), which output video sequences have a maximum pixel luminance,
- wherein the camera comprises a location capturing user interface (210) arranged to enable an operator of the video camera to move during an initial scene discovery phase to at least two positions (Pos1, Pos2) in a scene which have a different illumination compared to each other, and to capture a high dynamic range image (o_ImHDR) for each position which is selected via the location capturing user interface (210) to be a respresentative master HDR capturing for said location;
- an image color composition analysis circuit (250) arranged to receive the respective high dynamic range image (o_ImHDR) of the at least two positions, which are determined by applying a mapping function to digital numbers (DN) from an analog-digital converter as captured in a master capturing (RW), and for analyzing the high dynamic range image (o_ImHDR) of each respective position, to determine:
- a) for a first position (Pos1) a first set of iris setting, shutter time, and analog gain setting, wherein the first set is determined so that pixels of a first bright object (410) captured in the first position capture below pixel well overflow, and for a second position (Pos2) a second set of iris setting, shutter time, and analog gain setting, wherein the second set is determined so that pixels of a second bright object (420) captured in the second position capture below pixel well overflow, and storing said first set of iris, shutter time and analog gain settings for an estimate of the first position from a position identification system, and storing said second set of iris, shutter time and analog gain settings for an estimate of the second position from the position identification system and
- b) via a function determination circuit (251), determining a first position graded image (ODR) for a first master capturing of the first position, which comprises determining a first adjustable luminance allocation function (Fsl), for mapping digital numbers of the first master capturing to nit values of the first position graded image (ODR), and determining a second position graded image for a second master capturing of the second position, which comprises determining a second adjustable luminance allocation function (Fs2), for mapping digital numbers of the second master capturing to nit values of the second position graded image; and
- wherein the camera comprises a functions memory (220) for storing the respective luminance allocation functions (Fs1, Fs2) for the at least two positionsas determined by and received from the image color composition analysis circuit (250).

11. A system for configuring a video camera (200) as claimed in claim 10, wherein the function determination circuit (251) is arranged to enable the color composition director to determine for the at least two positions two respective secondary grading functions (FsL1, FsL2) for calculating from the respective master capturing (RW) or the first graded image (ODR) a corresponding second graded image (ImRDR), and the camera (201) is arranged to store in memory for future capturing those secondary grading functions (FsL1, FsL2).

12. A camera comprising a system as claimed in claims 10 or 11, or configured to operate in a system of claims 10 or 11, wherein the camera has a selection user interface (230) arranged to select from memory a luminance mapping function or secondary grading function corresponding to a capturing position.

13. A camera as claimed in claim 12, comprising a user interaction device such as a double throw switch (249), to toggle through function memory locations of stored positions of different illumination in a shooting environment, which when pushed in one direction select the previous position in a chain of linearly linked positions and when pushed in opposite direction selects the next position.

14. A camera (201) as claimed in claim 12 comprising a speech recognition system (520), and preferably a multi-microphone beam former system directed towards the camera operator, to select a stored luminance allocation function or secondary grading function based on an associated description of a position, such as e.g. "living room".

15. A camera (201) as claimed in claim 12, 13, or 14 comprising a location and/or orientation determination circuit (511), such as the location determination being based on triangulation with a positioning system placed in a region of space around the at least two positions, and such as the orientation determining circuit being connectable to a compass.

16. A camera (201) as claimed in claim 12, 13, 14 or 15 comprising a location identification circuit (540) based on analysis of a respective captured image in a vicinity of each of the at least two positions.

## Patentansprüche

1. Verfahren zum Steuern einer Videokamera (201), umfassend Einstellen eines Aufnahmemodus der Videokamera, bei dem die Ausgabepixelhelligkeiten für mehrere Positionen in einer aufzunehmenden Szene in abgestuften Videoausgabesequenzen von Bildern spezifiziert werden, wobei diese abgestuften Videoausgabesequenzen eine maximale Pixelhelligkeit aufweisen, umfassend:
- einen Bediener der Videokamera, der sich während einer anfänglichen Szenenerkennungsphase zu mindestens zwei Positionen (Pos1, Pos2) in einer Szene bewegt, die im Vergleich zueinander eine unterschiedliche Beleuchtung aufweisen;
wobei für eine erste Position (Pos1) ein erster Satz aus Blendeneinstellung, Verschlusszeit und analoger Verstärkungseinstellung bestimmt wird und für eine zweite Position (Pos2) ein zweiter Satz aus Blendeneinstellung, Verschlusszeit und analoger Verstärkungseinstellung bestimmt wird
wobei der erste Satz so bestimmt wird, dass Pixel eines ersten hellen Objekts (410), das an der ersten Position aufgenommen wird, unterhalb der Pixelkapazitätsüberlastung erfassen, und der zweite Satz so bestimmt wird, dass Pixel eines zweiten hellen Objekts (420), das an der zweiten Position aufgenommen wird, unterhalb der Pixelkapazitätsüberlastung erfassen; wobei die Bestimmung auf Grundlage mindestens eines Bildes mit hohem Dynamikbereich (o_ImHDR) für jede dieser mindestens zwei Positionen der Szene erfolgt, das durch Anwenden einer Abbildungsfunktion auf digitale Zahlen (DN) aus einem Analog-Digital-Wandler ermittelt wird, wie sie in einer Master-Aufnahme (RW) erfasst wurden; Speichern des ersten Satzes von Blenden-, Verschlusszeit- und analogen Verstärkungseinstellungen für eine Schätzung der ersten Position aus einem Positionsidentifikationssystem und Speichern des zweiten Satzes von Blenden-, Verschlusszeit- und analogen Verstärkungseinstellungen für eine Schätzung der zweiten Position aus einem Positionsidentifikationssystem; wobei das Verfahren ferner umfasst:
- Bestimmen eines ersten positionsabgestuften Bildes (ODR) für eine erste Master-Aufnahme der ersten Position, umfassend Bestimmen einer ersten einstellbaren Helligkeitszuordnungsfunktion (Fs1), um digitale Zahlen der ersten Master-Aufnahme auf Nit-Werte des ersten positionsabgestuften Bildes (ODR) abzubilden, und Bestimmen eines zweiten positionsabgestuften Bildes für eine zweite Master-Aufnahme der zweiten Position, umfassend Bestimmen einer zweiten einstellbaren Helligkeitszuordnungsfunktion (Fs2), um digitale Zahlen der zweiten Master-Aufnahme auf Nit-Werte des zweiten positionsabgestuften Bildes abzubilden; und
- Speichern der ersten und der zweiten Helligkeitszuordnungsfunktion (Fs1, Fs2) für die mindestens zwei Positionen an jeweiligen Speicherorten (221, 222) der Kamera.

2. Verfahren zum Steuern einer Videokamera (201) nach Anspruch 1, ferner umfassend:
- Bestimmen von zwei entsprechenden sekundären Abstufungsfunktionen (FsL1, FsL2) für die mindestens zwei Positionen, um aus der jeweiligen Master-Aufnahme (RW) bzw. den Helligkeiten des ersten abgestuften Bildes ein entsprechendes zweites abgestuftes Bild (ImRDR) zu berechnen; und
- Speichern der sekundären Abstufungsfunktionen (FsL1, FsL2) in einem Speicher (220) der Kamera,
- wobei das zweite abgestufte Bild (ImRDR) eine geringere maximale Helligkeit aufweist als das erste abgestufte Bild.

3. Verfahren zum Aufnehmen von Video mit hohem Dynamikbereich in einer Videokamera, wobei die Videokamera mindestens ein abgestuftes Bild mit hohem Dynamikbereich ausgibt, dessen Pixel zugewiesene Helligkeiten aufweisen, wobei das Verfahren umfasst:
- Anwenden des in Anspruch 1 oder 2 beanspruchten Verfahrens zum Einstellen eines Videokamera-Aufnahmemodus in einer anfänglichen Szenenerkennungsphase; und anschließend während des Aufnehmens des Videos:
- Bestimmen einer entsprechenden Position der mindestens zwei Positionen (Pos1, Pos2) für eine aktuelle Aufnahmeposition;
- Laden der entsprechenden Helligkeitszuordnungsfunktion (Fs1) für diese Position aus dem Speicher (220) der Kamera; und
- Anwenden der Helligkeitszuordnungsfunktion (Fs1) in einer Bildverarbeitungsschaltung (207), um digitale Zahlen aufeinanderfolgender Bilder, die während der Aufnahme an der aktuellen Position aufgenommen werden, auf entsprechende erste abgestufte Bilder (ODR; ImHDR) abzubilden und diese Bilder zu speichern oder auszugeben.

4. Verfahren nach Anspruch 3, wobei die Kamera (201) eine Benutzerinteraktionsvorrichtung, wie beispielsweise einen Umschalter (249), umfasst, um durch Funktionsspeicherplätze mit gespeicherten Positionen unterschiedlicher Beleuchtung in einer Aufnahmeumgebung zu blättern, wobei bei Betätigung in eine Richtung die vorherige Position in einer Kette linear verknüpfter Positionen ausgewählt wird und bei Betätigung in die entgegengesetzte Richtung die nächste Position ausgewählt wird, und wobei für die Bildverarbeitungsschaltung (207) die der ausgewählten Position entsprechende Helligkeitszuordnungsfunktion aus dem Speicher abgerufen wird.

5. Verfahren nach Anspruch 3, wobei die Kamera (201) ein Spracherkennungssystem umfasst, um eine gespeicherte Helligkeitszuordnungsfunktion oder sekundäre Abstufungsfunktion auf Grundlage einer zugehörigen Positionsbeschreibung, wie z. B. "Wohnzimmer", auszuwählen.

6. Verfahren nach Anspruch 3, wobei die Kamera (201) eine Schaltung zur Bestimmung von Standort und/oder Ausrichtung umfasst, beispielsweise auf Grundlage einer Triangulation mit einem Ortungssystem, das zumindest vorübergehend in einem Raumgebiet um die mindestens zwei Positionen herum angeordnet ist.

7. Verfahren nach Anspruch 3, wobei die Kamera (201) ein Standortidentifikationssystem umfasst, das auf einer Analyse eines jeweils aufgenommenen Bildes in der Umgebung jeder der mindestens zwei Positionen basiert.

8. Verfahren zum Steuern einer sekundären Videokamera (402), bei dem ein Videokamera-Aufnahmemodus eingestellt wird, bei dem Ausgabepixelhelligkeiten in einer oder mehreren abgestuften Versionen von Videoausgabesequenzen von Bildern spezifiziert werden, umfassend Einstellen in einer ersten Videokamera (401) eines Videokamera-Aufnahmemodus, bei dem Ausgabepixelhelligkeiten in einer oder mehreren abgestuften Versionen von Videoausgabesequenzen von Bildern spezifiziert werden, wie in Anspruch 1 oder 2 beansprucht, und Kommunizieren zwischen der Kamera, um eine Gruppe von Einstellungen, einschließlich der Blendeneinstellung, der Verschlusszeiteinstellung und der analogen Verstärkungseinstellung sowie jeder der festgelegten Helligkeitszuordnungsfunktionen, vom Speicher der ersten Kamera in den Speicher der zweiten Kamera zu kopieren.

9. Verfahren nach Anspruch 8, wobei entweder die erste Videokamera oder die zweite Kamera eine stationäre Kamera mit einer festen Position in einem Teil der Aufnahmeumgebung ist, und die andere Kamera eine bewegliche Kamera ist, und wobei entweder die Helligkeitszuordnungsfunktion für die Position der stationären Kamera in einen entsprechenden Funktionsspeicher der beweglichen Kamera kopiert wird oder die Helligkeitszuordnungsfunktion in der beweglichen Kamera für die Position der stationären Kamera aus dem entsprechenden Funktionsspeicher der beweglichen Kamera in den Speicher der stationären Kamera kopiert wird.

10. System (200) zum Konfigurieren einer Videokamera, umfassend:
- eine Videokamera (201), für die ein Aufnahmemodus zum Spezifizieren von Ausgabepixelhelligkeiten für mehrere Positionen in einer aufzunehmenden Szene in abgestuften Ausgabevideosequenzen von Bildern eingestellt werden soll, die von der Videokamera an einen Speicher (208) oder ein Kommunikationssystem (209) ausgegeben werden sollen, wobei diese Ausgabevideosequenzen eine maximale Pixelhelligkeit aufweisen.
- wobei die Kamera eine Standort erfassende Benutzerschnittstelle (210) umfasst, die so ausgelegt ist, dass sie es einem Bediener der Videokamera ermöglicht, sich während einer anfänglichen Szenenerkennungsphase zu mindestens zwei Positionen (Pos1, Pos2) in einer Szene zu bewegen, die im Vergleich zueinander eine unterschiedliche Beleuchtung aufweisen, und für jede Position ein Bild mit hohem Dynamikbereich (o_ImHDR) aufzunehmen, das über die Standort erfassende Benutzerschnittstelle (210) als repräsentative HDR-Master-Aufnahme für den jeweiligen Standort ausgewählt wird;
- eine Bildfarbzusammensetzungs-Analyseschaltung (250), die so ausgelegt ist, dass sie die jeweiligen Bilder mit hohem Dynamikbereich (o_ImHDR) der mindestens zwei Positionen empfängt, die durch Anwenden einer Abbildungsfunktion auf digitale Zahlen (DN) aus einem Analog-Digital-Wandler bestimmt werden, wie sie in einer Master-Aufnahme (RW) erfasst wurden, um das Bild mit hohem Dynamikbereich (o_ImHDR) jeder jeweiligen Position zu analysieren, um Folgendes zu bestimmen:
- a) für eine erste Position (Pos1) einen ersten Satz aus Blendeneinstellung, Verschlusszeit und analoger Verstärkungseinstellung, wobei der erste Satz so bestimmt wird, dass Pixel eines ersten hellen Objekts (410), das an der ersten Position aufgenommen wird, unterhalb der Pixelkapazitätsüberlastung erfassen, und für eine zweite Position (Pos2) einen zweiten Satz aus Blendeneinstellung, Verschlusszeit und analoger Verstärkungseinstellung, wobei der zweite Satz so bestimmt wird, dass Pixel eines zweiten hellen Objekts (420), das an der zweiten Position aufgenommen wird, unterhalb der Pixelkapazitätsüberlastung erfassen, und Speichern des ersten Satzes von Blenden-, Verschlusszeit- und analogen Verstärkungseinstellungen für eine Schätzung der ersten Position aus einem Positionsidentifikationssystem sowie Speichern des zweiten Satzes von Blenden-, Verschlusszeit- und analogen Verstärkungseinstellungen für eine Schätzung der zweiten Position aus dem Positionsidentifikationssystem und
- b) über eine Funktionsbestimmungsschaltung (251) Bestimmen eines ersten positionsabgestuften Bildes (ODR) für eine erste Master-Aufnahme der ersten Position, umfassend Bestimmen einer ersten einstellbaren Helligkeitszuordnungsfunktion (Fs1), um digitale Zahlen der ersten Master-Aufnahme auf Nit-Werte des ersten positionsabgestuften Bildes (ODR) abzubilden, und Bestimmen eines zweiten positionsabgestuften Bildes für eine zweite Master-Aufnahme der zweiten Position, umfassend Bestimmen einer zweiten einstellbaren Helligkeitszuordnungsfunktion (Fs2), um digitale Zahlen der zweiten Master-Aufnahme auf Nit-Werte des zweiten positionsabgestuften Bildes abzubilden; und
- wobei die Kamera einen Funktionsspeicher (220) zum Speichern der jeweiligen Helligkeitszuordnungsfunktionen (Fs1, Fs2) für die mindestens zwei Positionen umfasst, wie sie von der Bildfarbzusammensetzungs-Analyseschaltung (250) bestimmt und von dieser empfangen wurden.

11. System zum Konfigurieren einer Videokamera (200) nach Anspruch 10, wobei die Funktionsbestimmungsschaltung (251) so ausgelegt ist, dass sie es dem Farbkompositionsregisseur ermöglicht, für die mindestens zwei Positionen jeweils zwei sekundäre Abstufungsfunktionen (FsL1, FsL2) zu bestimmen, um aus der jeweiligen Master-Aufnahme (RW) oder dem ersten abgestuften Bild (ODR) ein entsprechendes zweites abgestuftes Bild (ImRDR) zu berechnen, und die Kamera (201) so ausgelegt ist, dass sie diese sekundären Abstufungsfunktionen (FsL1, FsL2) für zukünftige Aufnahmen im Speicher ablegt.

12. Kamera, die ein System nach Anspruch 10 oder 11 umfasst oder so ausgelegt ist, dass sie in einem System nach Anspruch 10 oder 11 betrieben werden kann, wobei die Kamera eine Auswahlbenutzerschnittstelle (230) aufweist, die dazu ausgelegt ist, aus einem Speicher eine einer Aufnahmeposition entsprechende Helligkeitszuordnungsfunktion oder sekundäre Abstufungsfunktion auszuwählen.

13. Kamera nach Anspruch 12, die eine Benutzerinteraktionsvorrichtung, wie beispielsweise einen Umschalter (249), umfasst, um durch Funktionsspeicherplätze mit gespeicherten Positionen unterschiedlicher Beleuchtung in einer Aufnahmeumgebung zu blättern, wobei bei Betätigung in eine Richtung die vorherige Position in einer Kette linear verknüpfter Positionen ausgewählt wird und bei Betätigung in die entgegengesetzte Richtung die nächste Position ausgewählt wird.

14. Kamera (201) nach Anspruch 12, die ein Spracherkennungssystem (520) und bevorzugt ein auf den Kameramann gerichtetes Multi-Mikrofon-Strahlformer-System umfasst, um auf Grundlage einer zugehörigen Positionsbeschreibung, wie z. B. "Wohnzimmer", eine gespeicherte Helligkeitszuordnungsfunktion oder sekundäre Abstufungsfunktion auszuwählen.

15. Kamera (201) nach Anspruch 12, 13 oder 14, die eine Schaltung (511) zur Bestimmung von Standort und/oder Ausrichtung umfasst, wobei die Standortbestimmung beispielsweise auf einer Triangulation mit einem Ortungssystem basiert, das in einem Raumgebiet um die mindestens zwei Positionen herum angeordnet ist, und wobei die Schaltung zur Bestimmung der Ausrichtung beispielsweise mit einem Kompass verbindbar ist.

16. Kamera (201) nach Anspruch 12, 13, 14 oder 15, die eine Standortidentifikationsschaltung (540) umfasst, die auf einer Analyse eines jeweiligen aufgenommenen Bildes in der Nähe jeder der mindestens zwei Positionen basiert.

## Revendications

1. Procédé de commande d'une caméra vidéo (201) comprenant le réglage d'un mode de capture de caméra vidéo spécifiant des luminances de pixel de sortie pour plusieurs positions dans une scène à capturer, dans des séquences vidéo de sortie gradées d'images, ces séquences vidéo de sortie gradées ayant une luminance de pixel maximale, comprenant :
- un opérateur de la caméra vidéo se déplaçant, lors d'une phase initiale de découverte de scène, vers au moins deux positions (Pos1, Pos2) dans une scène qui ont un éclairage différent l'une par rapport à l'autre ; pour une première position (Pos1), un premier ensemble de réglage d'iris, d'un temps d'obturation et de réglage de gain analogique étant déterminé, et pour une seconde position (Pos2), un second ensemble de réglage d'iris, d'un temps d'obturation et de réglage de gain analogique étant déterminé,
le premier ensemble étant déterminé de sorte que des pixels d'un premier objet lumineux (410) capturés dans la première position capturent en dessous du débordement de puits de pixel, et le second ensemble étant déterminé de sorte que des pixels d'un second objet lumineux (420) capturés dans la seconde position capturent en dessous du débordement de puits de pixel ;
la détermination étant réalisée sur la base d'au moins une
image à plage dynamique élevée (o_ImHDR) pour chacune de ces au moins deux positions de la scène, qui est déterminée par application d'une fonction de mappage à des valeurs numériques (DN) provenant d'un convertisseur analogique-numérique telles que capturées dans une capture maître (RW) ;
le stockage dudit premier ensemble de réglage d'iris, du temps d'obturation et du gain analogique - pour une estimation de la première position à partir d'un système d'identification de position, et le stockage dudit second ensemble de réglage d'iris, du temps d'obturation et du gain analogique pour une estimation de la seconde position à partir d'un système d'identification de position ;
le procédé comprenant en outre :
- la détermination d'une image gradée de première position (ODR) pour une première capture maître de la première position, qui comprend la détermination d'une première fonction d'attribution de luminance ajustable (Fs1), pour mapper des valeurs numériques de la première capture maître sur des valeurs en nits de l'image gradée de première position (ODR), et la détermination d'une image gradée de seconde position pour une seconde capture maître de la seconde position, qui comprend la détermination d'une seconde fonction d'attribution de luminance ajustable (Fs2), pour mapper des valeurs numériques de la seconde capture maître sur des valeurs en nits de l'image gradée de seconde position ; et
- le stockage des première et seconde fonctions d'attribution de luminance (Fs1, Fs2) pour les au moins deux positions dans des emplacements de mémoire respectifs (221, 222) de la caméra.

2. Procédé de commande d'une caméra vidéo (201) selon la revendication 1, comprenant en outre :
- la détermination, pour les au moins deux positions, de deux fonctions de gradation secondaires correspondantes (FsL1, FsL2) pour calculer à partir de la capture maître respective (RW) ou des luminances de la première image gradée une seconde image gradée correspondante (ImRDR) ; et
- le stockage des fonctions de gradation secondaires (FsL1, FsL2) dans une mémoire (220) de la caméra,
- la seconde image gradée (ImRDR) ayant une luminance maximale inférieure à celle de la première image gradée.

3. Procédé de capture de vidéo à plage dynamique élevée dans une caméra vidéo, la caméra vidéo fournissant en sortie au moins une image gradée à plage dynamique élevée avec ses pixels ayant des luminances attribuées, le procédé comprenant :
- l'application, lors d'une phase initiale de découverte de scène, du procédé de réglage d'un mode de capture de caméra vidéo selon la revendication 1 ou 2 ; et ultérieurement lors de la capture de la vidéo :
- la détermination d'une position correspondante des au moins deux positions (Pos1, Pos2) pour une position de capture courante ;
- le chargement, à partir de la mémoire (220) de la caméra, de la fonction d'attribution de luminance correspondante (Fs1) pour cette position ; et
- l'application, dans un circuit de traitement d'image (207), de la fonction d'attribution de luminance (Fs1) pour mapper des valeurs numériques d'images successives capturées lors de la capture à la position courante sur des premières images gradées (ODR ; ImHDR) correspondantes, et le stockage ou la fourniture en sortie de ces images.

4. Procédé selon la revendication 3, la caméra (201) comprenant un dispositif d'interaction avec l'utilisateur, tel qu'un commutateur à deux directions (249), pour faire défiler les emplacements de mémoire de fonctions de positions stockées d'éclairage différent dans un environnement de prise de vue, qui, lorsqu'il est poussé dans une direction, sélectionne la position précédente dans une chaîne de positions liées linéairement et, lorsqu'il est poussé dans la direction opposée, sélectionne la position suivante, et l'extraction, depuis la mémoire, pour le circuit de traitement d'image (207), de la fonction d'attribution de luminance correspondant à la position sélectionnée.

5. Procédé selon la revendication 3, la caméra (201) comprenant un système de reconnaissance vocale pour sélectionner une fonction d'attribution de luminance stockée ou une fonction de gradation secondaire sur la base d'une description associée d'une position, telle que par exemple « salon ».

6. Procédé selon la revendication 3, la caméra (201) comprenant un circuit de détermination de localisation et/ou d'orientation, basé par exemple sur une triangulation avec un système de positionnement au moins temporairement placé dans une région de l'espace autour des au moins deux positions.

7. Procédé selon la revendication 3, la caméra (201) comprenant un système d'identification de localisation basé sur l'analyse d'une image capturée respective à proximité de chacune des au moins deux positions.

8. Procédé de commande d'une caméra vidéo secondaire (402) réglant un mode de capture de caméra vidéo spécifiant des luminances de pixel de sortie dans une ou plusieurs versions gradées de séquences vidéo de sortie d'images, comprenant le réglage dans une première caméra vidéo (401) d'un mode de capture de caméra vidéo spécifiant des luminances de pixel de sortie dans une ou plusieurs versions gradées de séquences vidéo de sortie d'images selon la revendication 1 ou 2, et la communication entre les caméras pour copier un groupe de réglages, comprenant le réglage d'iris, le réglage du temps d'obturation et le réglage de gain analogique, et l'une quelconque des fonctions d'attribution de luminance déterminées de la mémoire de la première caméra à la mémoire de la seconde caméra.

9. Procédé selon la revendication 8, l'une parmi la première caméra vidéo et la seconde caméra étant une caméra statique avec une position fixe dans une partie de l'environnement de prise de vue, et l'autre caméra étant une caméra mobile, et soit la copie de la fonction d'attribution de luminance pour la position de la caméra statique dans une mémoire de fonctions correspondante de la caméra mobile, soit la copie de la fonction d'attribution de luminance dans la caméra mobile pour la position de la caméra statique depuis la mémoire de fonctions correspondante de la caméra mobile vers la mémoire de la caméra statique.

10. Système (200) de configuration d'une caméra vidéo, comprenant :
- une caméra vidéo (201) pour laquelle régler un mode de capture spécifiant des luminances de pixel de sortie, pour plusieurs positions dans une scène à capturer, dans des séquences vidéo de sortie gradées d'images à fournir en sortie par la caméra vidéo vers une mémoire (208) ou un système de communication (209), lesquelles séquences vidéo de sortie présentent une luminance de pixel maximale ;
- la caméra comprenant une interface utilisateur de capture de localisation (210) agencée pour permettre à un opérateur de la caméra vidéo de se déplacer lors d'une phase initiale de découverte de scène vers au moins deux positions (Pos1, Pos2) dans une scène qui ont un éclairage différent l'une par rapport à l'autre, et de capturer une image à plage dynamique élevée (o_ImHDR) pour chaque position qui est sélectionnée par l'intermédiaire de l'interface utilisateur de capture de localisation (210) pour être une capture maître HDR représentative pour ladite localisation ;
- un circuit d'analyse de composition de couleurs d'image (250) agencé pour recevoir l'image à plage dynamique élevée respective (o_ImHDR) des au moins deux positions, déterminées par application d'une fonction de mappage à des valeurs numériques (DN) provenant d'un convertisseur analogique-numérique telles que capturées dans une capture maître (RW), et pour analyser l'image à plage dynamique élevée (o_ImHDR) de chaque position respective, pour déterminer :
- a) pour une première position (Pos1), un premier ensemble de réglages d'iris, de temps d'obturation et de réglage de gain analogique, le premier ensemble étant déterminé de sorte que des pixels d'un premier objet lumineux (410) capturés dans la première position capturent en dessous du débordement de puits de pixel, et pour une seconde position (Pos2), un second ensemble de réglages d'iris, de temps d'obturation et de réglage de gain analogique, le second ensemble étant déterminé de sorte que des pixels d'un second objet lumineux (420) capturés dans la seconde position capturent en dessous du débordement de puits de pixel, et le stockage dudit premier ensemble de réglages d'iris, du temps d'obturation et du gain analogique pour une estimation de la première position à partir d'un système d'identification de position, et le stockage dudit second ensemble de réglages d'iris, du temps d'obturation et du gain analogique pour une estimation de la seconde position à partir du système d'identification de position et
- b) par l'intermédiaire d'un circuit de détermination de fonction (251), la détermination d'une image gradée de première position (ODR) pour une première capture maître de la première position, qui comprend la détermination d'une première fonction d'attribution de luminance ajustable (Fs1), pour mapper des valeurs numériques de la première capture maître sur des valeurs en nits de l'image gradée de première position (ODR), et la détermination d'une image gradée de seconde position pour une seconde capture maître de la seconde position, qui comprend la détermination d'une seconde fonction d'attribution de luminance ajustable (Fs2), pour mapper des valeurs numériques de la seconde capture maître sur des valeurs en nits de l'image gradée de seconde position ; et
- la caméra comprenant une mémoire de fonctions (220) pour stocker les fonctions d'attribution de luminance respectives (Fs1, Fs2) pour les au moins deux positions telles que déterminées par le circuit d'analyse de composition de couleurs d'image (250) et reçues de celui-ci.

11. Système de configuration d'une caméra vidéo (200) selon la revendication 10, le circuit de détermination de fonction (251) étant agencé pour permettre au directeur de composition de couleurs de déterminer, pour les au moins deux positions, deux fonctions de gradation secondaires respectives (FsL1, FsL2) pour calculer à partir de la capture maître respective (RW) ou de la première image gradée (ODR) une seconde image gradée correspondante (ImRDR), et la caméra (201) étant agencée pour stocker en mémoire, en vue d'une capture ultérieure, ces fonctions de gradation secondaires (FsL1, FsL2).

12. Caméra comprenant un système selon la revendication 10 ou 11, ou configurée pour fonctionner dans un système selon la revendication 10 ou 11, la caméra ayant une interface utilisateur de sélection (230) agencée pour sélectionner en mémoire une fonction de mappage de luminance ou une fonction de gradation secondaire correspondant à une position de capture.

13. Caméra selon la revendication 12, comprenant un dispositif d'interaction avec l'utilisateur tel qu'un commutateur à deux directions (249), pour faire défiler les emplacements de mémoire de fonctions de positions stockées d'éclairage différent dans un environnement de prise de vue, qui, lorsqu'il est poussé dans une direction, sélectionne la position précédente dans une chaîne de positions liées linéairement et, lorsqu'il est poussé dans la direction opposée, sélectionne la position suivante.

14. Caméra (201) selon la revendication 12, comprenant un système de reconnaissance vocale (520), et de préférence un système de formation de faisceau à microphones multiples dirigé vers l'opérateur de la caméra, pour sélectionner une fonction d'attribution de luminance stockée ou une fonction de gradation secondaire sur la base d'une description associée d'une position, telle que par exemple « salon ».

15. Caméra (201) selon la revendication 12, 13 ou 14, comprenant un circuit de détermination de localisation et/ou d'orientation (511), la détermination de localisation étant par exemple basée sur une triangulation avec un système de positionnement placé dans une région de l'espace autour des au moins deux positions, et le circuit de détermination d'orientation pouvant par exemple être connecté à une boussole.

16. Caméra (201) selon la revendication 12, 13, 14 ou 15, comprenant un circuit d'identification de localisation (540) basé sur l'analyse d'une image capturée respective à proximité de chacune des au moins deux positions.
